# EUROPÄISCHE PATENTSCHRIFT

(11) **EP 2 409 145 B1**
(45) Veröffentlichungstag und Bekanntmachung des Hinweises auf die Patenterteilung: **20.04.2016**
(21) Anmeldenummer: 10709981.4
(22) Anmeldetag: 19.03.2010
(51) Int. Cl.: G01N 30/58, G01N 27/447, B01D 15/18

(54) **VORRICHTUNG FÜR DIE KONTINUIERLICHE ANNULARE ELEKTROCHROMATOGRAPHIE**
DEVICE FOR CONTINUOUS CAPILLARY ANNULAR ELECTROCHROMATOGRAPHY
DISPOSITIF DE ELECTROCHROMATOGRAPHIE ANNULAIRE CONTINUE

(30) Priorität: 19.03.2009 DE 102009013899
(43) Veröffentlichungstag der Anmeldung: 25.01.2012
(73) Patentinhaber: Technische Universität Kaiserslautern, 67663 Kaiserslautern (DE)
(72) Erfinder: BART, Hans-Jörg, 67691 Hochspeyer (DE)
(74) Vertreter: Rippel, Hans Christoph
(86) Internationale Anmeldenummer: PCT/EP2010/001741
(87) Internationale Veröffentlichungsnummer: WO 2010/105841

(56) Entgegenhaltungen:
- WO-A1-99/29388
- US-A- 4 642 169
- US-A- 5 332 480
- MOTONOBU GOTO, SHIGEO GOTO: "CONTINUOUS SEPARATION USING AN ANNULAR CHROMATOGRAPH WITH ROTATING INLET AND OUTLET" JOURNAL OF CHEMICAL ENGINEERING OF JAPAN, Bd. 20, Nr. 6, 1987, Seiten 598-603, XP002583725 TOKYO, JAPAN
- Andrea UretschläGer ET AL: "Preparative continuous annular chromatography (P-CAC), a review", BIOPROCESS AND BIOSYSTEMS ENGINEERING, vol. 25, no. 2, 1 June 2002 (2002-06-01), pages 129-140, XP055222611, DE ISSN: 1615-7591, DOI: 10.1007/s00449-002-0282-0

## Beschreibung

### Gebiet der Erfindung

Die Erfindung betrifft eine Ringspaltapparatur zur Durchführung einer Kapillarelektrochromatographie sowie ein Verfahren zur Separation mindestens einer Komponente aus einer Ausgangssubstanz. Weiterhin betrifft die Erfindung eine Verwendung der Ringspaltapparatur. Derartige Vorrichtungen und Verwendungen werden beispielsweise in der pharmazeutischen Industrie eingesetzt, um kontinuierlich bestimmte Komponenten aus einer Ausgangssubstanz zu gewinnen.

### Stand der Technik

Die Ringspaltchromatographie ist eine aus verschiedenen Bereichen der Naturwissenschaft und Technik bekannte Methode, um aus einer Flüssigphase einer vielkomponentigen Mischung bestimmte Anteile zu separieren. So wird beispielsweise in J. Brozio and Hans-Jörg Bart: A rigorous model for annular chromatography, Chem. Engineering Technology, 2004, 27, Nr. 9, Seiten 962-970, ein Modell zur Beschreibung der Trennvorgänge in der Ringspaltchromatographie beschrieben. Bei der Ringspaltchromatographie ist eine stationäre Phase zwischen zwei konzentrischen Zylindern angeordnet, welche einen Ringspalt bilden. Dabei wird ein rotierender Einlaufstrom und eine rotierende Auffangvorrichtung verwendet, wohingegen der Ringspalt raumfest verbleibt.

Eine Weiterbildung der Ringspaltchromatographie stellt die so genannte Kapillarspaltelektrophorese dar, welche ihrerseits wiederum einen Spezialfall einer so genannten Kapillarelektrochromatographie oder Kapillarelektrophorese darstellt. Ein Beispiel einer Ringspaltelektrophorese wird in US 4,642,169 beschrieben. Dort wird eine kontinuierliche Elektrophoresesäule mit einem rotierenden Ringspalt für die Trennung von chemischen Mischungen beschrieben. Dabei wird in einer axialen Richtung der Säule ein elektrisches Feld angelegt, und die Säule wird gedreht. Hierbei bilden die einzelnen Komponenten der Mischungen helikale Banden in dem Kapillarspalt, mit einem für die jeweilige Komponente charakteristischen stationären Austrittspunkt bei einer bestimmten Winkelstellung am Boden der Säule.

Die aus dem Stand der Technik bekannten Kapillarspaltverfahren weisen jedoch in der Praxis einige technische Herausforderungen auf, welche bisher eine Anwendung dieser Techniken im größeren Maßstab zumindest weit gehend verhindert haben. So sind die meisten aus dem Stand der Technik bekannten Vorrichtungen und Verfahren bislang lediglich für analytische Zwecke eingesetzt worden, da die kleinen Säulendimensionen die Produktivität auf ein paar wenige Milliliter pro Tag begrenzen. Bei dem in der oben genannten Veröffentlichung von J. Brozio und H.-J. Bart beschriebenen Verfahren sind aufgrund der genannten Probleme erhebliche Drücke erforderlich, um einen Mindestdurchsatz bei dem beschriebenen Trennverfahren zu erzeugen.

Kapillarelektrochromatographische Verfahren, wie beispielsweise das in US 4,642,169 beschriebene Verfahren, stellen ihrerseits zwar ein gutes Werkzeug für die Trennung komplexer Mischungen mit chemisch ähnlichen Komponenten dar, da diese die hohe Separationseffizienz der Kapillarelektrophorese mit den Vorteilen der Hochleistungsflüssigkeitschromatographie (high performance liquid chromatography, HPLC) verbinden, welche auf einen weiten Bereich sowohl neutraler als auch geladener Komponenten anwendbar ist. Auch die Kapillarelektrochromatographie ist jedoch aufgrund der genannten Schwierigkeiten mit dem Durchsatz bislang nahezu ausschließlich für analytische Zwecke eingesetzt worden.

Zudem treten bei den bekannten Vorrichtungen zur Kapillarelektrochromatographie, beispielsweise der aus US 4,642,169 bekannten Vorrichtung, zahlreiche technische Herausforderungen auf. Eine dieser Herausforderungen besteht darin, dass die üblicherweise verwendeten Lösungsmittel und/oder Elektrolyte bei der Anwendung in elektrischen Feldern und der damit verbundenen Erwärmung häufig zu Blasenbildung neigen, was das Trennverfahren und die Präzision des Trennverfahrens empfindlich stören kann. Zudem besteht bei den genannten Vorrichtungen, sofern es diese überhaupt für eine kontinuierliche Trennung eingesetzt werden, nahezu keine Möglichkeit, die Produktqualität der abgetrennten Produkte zu überwachen oder zu steuern.

### Aufgabe der Erfindung

Es ist daher eine Aufgabe der vorliegenden Erfindung, eine Vorrichtung bereitzustellen, welche die Verwendung einer Kapillarspaltchromatographie für eine kontinuierliche Auftrennung einer Ausgangssubstanz in ihre Bestandteile ermöglicht, wobei die Nachteile bekannter Vorrichtungen vermieden werden sollen.

### Offenbarung der Erfindung

Diese Aufgabe wird durch eine Ringspaltapparatur zur Durchführung einer Kapillarelektrochromatographie sowie durch ein Verfahren zur Separation mindestens einer Komponente aus einer Ausgangssubstanz gemäß den Merkmalen der unabhängigen Ansprüche gelöst. Dabei kann das Verfahren insbesondere unter Verwendung einer erfindungsgemäßen Ringspaltapparatur in einer oder mehreren der im Folgenden beschriebenen Ausführungsformen durchgeführt werden, so dass für mögliche Varianten des Verfahrens auf die folgende Beschreibung der Ringspaltapparatur verwiesen werden kann. Vorteilhafte Weiterbildungen der Erfindung, welche einzeln oder in Kombination realisierbar sind, sind in den Unteransprüchen dargestellt. Weiterhin wird eine Verwendung der Ringspaltapparatur zur präparativen und vorzugsweise kontinuierlichen Abtrennung mindestens einer Komponente aus einer Ausgangssubstanz vorgeschlagen.

Die vorgeschlagene Ringspaltapparatur dient zur Durchführung einer Kapillarelektrochromatographie. Insbesondere kann es sich dabei um eine kontinuierliche Kapillarelektrochromatographie handeln, und das Verfahren zur Separation der mindestens einen Komponente aus einer Ausgangssubstanz kann insbesondere kontinuierlich durchgeführt werden, d.h. zu präparativen Zwecken, wobei das Ziel in der Gewinnung der mindestens einen Komponente und nicht lediglich in deren Nachweis besteht.

Unter einer Kapillarelektrochromatographie ist dabei allgemein ein Trennverfahren zu verstehen, welches in einer Kapillare durchgeführt wird, also einem Element, welches auf eine oder mehrere Flüssigkeiten einen Kapillareffekt ausgeübt. Diese Kapillare ist im vorliegenden Fall als Ringspalt ausgestaltet, vorzugsweise als Ringspalt mit kreisförmiger oder zumindest runder Gestalt. Der Ringspalt kann dabei insbesondere über den gesamten Umfang hinweg mit gleichmäßiger Dicke ausgestaltet sein. Die Kapillarelektrochromatographie ist ein Trennverfahren, bei welchem unter Anwendung eines elektrischen Feldes geladene oder polare Teilchen, beispielsweise Moleküle eines Elektrolyten und/oder der Ausgangssubstanz selbst, im elektrischen Feld durch den Kapillarspalt wandern. Aufgrund unterschiedlicher Ladung und/oder unterschiedlicher Wechselwirkung mit einer in dem Kapillarspalt aufgenommenen stationären Phase unterscheiden sich die Mobilitäten der Teilchen und damit deren Wanderungsgeschwindigkeit, was in der Kapillarelektrochromatographie zur Trennung ausgenutzt wird.

Die vorgeschlagene Ringspaltapparatur umfasst dementsprechend mindestens eine Trennvorrichtung mit mindestens einem feststehenden Ringspalt. Unter einem Ringspalt ist dabei ein sich in einer axialen Richtung der Trennvorrichtung erstreckender Spalt zu verstehen, welcher um die Achse der Trennvorrichtung herum vorzugsweise geschlossen ist. Wie oben dargestellt, kann dieser Ringspalt beispielsweise eine runde Gestalt aufweisen, insbesondere einen kreisförmigen Querschnitt, beispielsweise mit einer konstanten Spaltbreite über den Umfang und vorzugsweise über die Höhe der Trennvorrichtung hinweg. Die Trennvorrichtung kann beispielsweise als Trennsäule ausgestaltet sein, und der Ringspalt kann beispielsweise durch zwei oder mehr konzentrische Zylinder gebildet werden, zwischen denen der Ringspalt ausgebildet ist. Anstelle eines einzelnen Ringspalts können auch mehrere Ringspalte vorgesehen sein, beispielsweise konzentrisch zueinander angeordnete Ringspalte.

Der Ringspalt ist zumindest teilweise mit mindestens einer stationären Phase angefüllt. Unter einer stationären Phase ist dabei ein Material und/oder Element zu verstehen, welches sich im Wesentlichen nicht mit der zu trennenden Ausgangssubstanz mitbewegt, sondern ortsfest im Ringspalt verbleibt und welches eingerichtet ist, um mit der Ausgangssubstanz und/oder einem Elektrolyten in Wechselwirkung zu treten, beispielsweise um die Mobilität der einzelnen Komponenten der Ausgangssubstanz und/oder des Elektrolyten zu beeinflussen. Grundsätzlich kann auch die Wand des Ringspalts selbst als stationäre Phase fungieren, was ebenfalls unter den Begriff des Anfüllens mit der stationären Phase zu subsumieren sein soll.

Weiterhin soll der Ringspalt mit mindestens einem Elektrolyten befüllbar sein. Unter einem Elektrolyten ist dabei ein Material zu verstehen, welches vorzugsweise flüssig ausgestaltet ist und welches geladene und/oder stark polare Teilchen aufweist, beispielsweise Moleküle, welche in einem elektrischen Feld wandern. Dieser Elektrolyt ersetzt oder ergänzt den in der Kapillarspaltchromatographie verwendeten Eluenten, so dass im Folgenden die Begriffe Elektrolyt und Eluent auch synonym verwendet werden. Der Elektrolyt kann neben der polaren und/oder geladenen Komponente weiterhin auch unpolare Komponenten enthalten sowie weitere Komponenten, wie beispielsweise Lösungsmittel, Puffer oder ähnliches. Wird eine von sich aus polare und/oder geladene Teilchen aufweisende Ausgangssubstanz in einer ausreichenden Menge verwendet, so kann gegebenenfalls auf die Verwendung eines Elektrolyten auch vollständig verzichtet werden, oder es kann ein vollständig neutraler oder unpolarer Eluent verwendet werden.

Die Ausgestaltung des Ringspalts derart, dass dieser mit dem Elektrolyten befüllbar ist, bedeutet insbesondere, dass dieser Ringspalt von zumindest einer Seite für eine Befüllvorrichtung zugänglich ist, mittels derer der Ringspalt, beispielsweise zeitlich kontinuierlich und/oder in vorgegebenen Abständen, mit Elektrolyt befüllt werden kann, vorzugsweise vollständig und vorzugsweise gleichmäßig über seinen Umfang hinweg. Dieses Befüllen kann vorzugsweise an einer Aufgabeseite erfolgen, wobei an der entgegengesetzten Seite der Ringspalt derart ausgestaltet sein kann, dass der Elektrolyt wieder aus diesem austreten kann.

Die Ringspaltapparatur weist mindestens ein Aufgabesystem zum Einbringen der Ausgangssubstanz in den Ringspalt auf. Bei der Ausgangssubstanz kann es sich grundsätzlich um eine beliebige Substanz handeln, insbesondere eine Mischung mehrerer chemischer Komponenten, von denen mindestens eine aus der Ausgangssubstanz abgetrennt werden soll. Die Ausgangssubstanz kann beispielsweise als fluides Medium ausgestaltet sein, also beispielsweise als flüssiges Medium. Auch feste Ausgangssubstanzen sind jedoch grundsätzlich einsetzbar, wobei diese beispielsweise mittels eines geeigneten Lösungsmittels in eine flüssige Phase überführt werden können, um dann dem Ringspalt zugeführt zu werden. Beispiele eines Aufgabesystems werden unten näher beschrieben. Das Aufgabesystem kann beispielsweise an einer Aufgabeseite des Ringspalts angeordnet sein, vorzugsweise an einer Aufgabeseite, welche im Betrieb der Ringspaltapparatur an einer Oberseite der Trennvorrichtung angeordnet ist.

Weiterhin umfasst die Ringspaltapparatur ein Auffangsystem zum Aufnehmen mindestens einer in der Trennvorrichtung abgetrennten Komponente der Ausgangssubstanz und/oder des Elektrolyten. Das Auffangsystem kann beispielsweise an einer der Aufgabeseite entgegengesetzt angeordneten Aufnahmeseite oder Auffangseite der Ringspaltapparatur bzw. der Trennvorrichtung angeordnet sein, beispielsweise an einer Unterseite der Trennvorrichtung. Dabei kann die mindestens eine Komponente der Ausgangssubstanz aufgenommen werden und/oder es kann der Elektrolyt als Ganzes aufgenommen werden und/oder Bestandteile des Elektrolyten, da grundsätzlich auch eine Auftrennung des Elektrolyten selbst in der Ringspaltapparatur möglich ist.

Dabei ist das Aufgabesystem erfindungsgemäß eingerichtet, um um eine Achse der Trennvorrichtung zu rotieren. Beispielsweise kann es sich dabei um eine Symmetrieachse der Trennvorrichtung handeln, beispielsweise eine Längserstreckungsachse der Trennvorrichtung, welche, wie oben beschrieben, beispielsweise als Trennsäule ausgestaltet sein kann und welche den Ringspalt umfasst. Beispielsweise kann die Achse eine Symmetrieachse des Ringspalts sein, beispielsweise eine Mittenachse des kreiszylinderförmigen Ringspalts.

Das Aufgabesystem weist also eine Vorrichtung auf, mittels derer mindestens eine Aufgabestelle, an welcher die Ausgangssubstanz in den Ringspalt eingebracht wird, kontinuierlich oder diskontinuierlich rotiert werden kann. Beispiele einer derartigen Rotationsvorrichtung werden unten näher beschrieben.

Weiterhin ist die Ringspaltapparatur eingerichtet, um den Ringspalt mit einem elektrischen Feld mit mindestens einer axialen Komponente, also mindestens einer Komponente parallel zu der Achse der Trennvorrichtung, zu beaufschlagen. Vorzugsweise ist das elektrische Feld zumindest im Bereich der Trennvorrichtung vollständig parallel zu der Achse angeordnet. Zum Zweck der Erzeugung des elektrischen Feldes kann die Ringspaltapparatur beispielsweise, wie unten näher ausgeführt wird, mehrere Elektroden umfassen.

Zur Separation der mindestens einen Komponente aus der Ausgangssubstanz gemäß dem erfindungsgemäßen Verfahren wird beispielsweise eine Ringspaltapparatur gemäß der Erfindung verwendet. Auch die Verwendung anders gestalteter Ringspaltapparaturen ist jedoch grundsätzlich möglich. Die Ringspaltapparatur weist dabei mindestens eine Trennvorrichtung mit mindestens einem feststehenden Ringspalt auf, wobei der Ringspalt zumindest teilweise mit mindestens einer stationären Phase angefüllt ist und mit mindestens einem Elektrolyten befüllt wird. Die Ausgangssubstanz wird bei dem erfindungsgemäßen Verfahren in den Ringspalt eingebracht, und es wird mindestens eine in der Trennvorrichtung abgetrennte Komponente der Ausgangssubstanz und/oder des Elektrolyten aufgenommen und/oder der Elektrolyt selbst. Zum Aufnehmen der Komponente wird dabei ein Auffangsystem verwendet, welches um eine Achse der Trennvorrichtung rotiert. Der Ringspalt wird mit einem elektrischen Feld mit mindestens einer axialen Komponente beaufschlagt. Für die Definitionen der einzelnen Komponenten, welche bei dem erfindungsgemäßen Verfahren verwendet werden, sowie für mögliche Ausgestaltungen des Verfahrens kann auf die obige Beschreibung sowie auf die nachfolgende Beschreibung bevorzugter Ausführungsformen der Ringspaltapparatur verwiesen werden.

Bei der erfindungsgemäßen Ringspaltapparatur werden also Ideen der bekannten Ringspaltchromatographie, wie beispielsweise aus der oben beschriebenen Veröffentlichung von J. Brozio und H.-J. Bart bekannt, mit dem Prinzip der Elektrophorese verknüpft, um hierdurch, unter Vermeidung der oben beschriebenen Problematiken, ein Trennverfahren mit hohem Durchsatz bereitstellen zu können. Weitere Vorteile werden unten aufgeführt.

Bei der vorgeschlagenen Ringspaltapparatur ist also das Aufgabesystem eingerichtet, um um die Achse der Trennvorrichtung zu rotieren. In einer bevorzugten Ausgestaltung der Ringspaltapparatur kann weiterhin auch das Auffangsystem eingerichtet sein, um zumindest teilweise um die Achse der Trennvorrichtung zu rotieren, insbesondere gleichsinnig zur Rotation des Aufgabesystems. Insbesondere kann die Rotation mit im Wesentlichen gleicher Geschwindigkeit erfolgen wie die Rotation des Aufgabesystems. Beispielsweise können beide Systeme, also das Auffangsystem und das Aufgabesystem, einzeln oder beide, mit einer Geschwindigkeit zwischen 0,5 und 5 Umdrehungen pro Stunde, insbesondere 1 bis 2 Umdrehungen pro Stunde, rotieren.

Weitere bevorzugte Ausgestaltungen betreffen die Ausführung des Auffangsystems. So hat es sich als besonders bevorzugt herausgestellt, wenn das Auffangsystem wenigstens einen feststehenden Auffangteil und wenigstens einen rotierenden Auffangteil umfasst. Der feststehende Auffangteil kann beispielsweise ganz oder teilweise in die Trennvorrichtung integriert sein, beispielsweise indem dieser als Teil eines Gehäuses und/oder eines sonstigen Bestandteils der Trennvorrichtung ausgestaltet wird, beispielsweise indem der feststehende Auffangteil eine Bodenplatte der Trennvorrichtung umfasst. Unter einem feststehenden Auffangteil ist dabei ein Auffangteil zu verstehen, welches nicht um die Achse rotiert, wohingegen der rotierende Auffangteil mit um die Achse rotiert.

Der feststehende Auffangteil kann insbesondere näher am Ringspalt angeordnet sein als der rotierende Auffangteil, beispielsweise indem der feststehende Auffangteil zwischen dem rotierenden Auffangteil und der auffangseitigen Öffnung des Ringspalts angeordnet ist. Beispielsweise kann der rotierende Auffangteil unterhalb des feststehenden Auffangteils angeordnet sein.

Der feststehende Auffangteil kann beispielsweise eine Mehrzahl von Auffangvorrichtungen zum im Wesentlichen gleichzeitigen getrennten Auffangen von in unterschiedlichen Winkelstellungen aus dem Ringspalt austretenden Komponenten der Ausgangssubstanz und/oder des Elektrolyten aufweisen. Beispielsweise kann die Auffangvorrichtung eine oder mehrere Öffnungen in einer Bodenplatte aufweisen. Beispielsweise kann es sich dabei um eine Bodenplatte handeln, welche unterhalb des Ringspalts angeordnet ist, welche auch beispielsweise Teil eines Gehäuses der Trennvorrichtung sein kann. Dabei sind vorzugsweise mehrere Öffnungen vorgesehen. Die Öffnungen können beispielsweise Löcher mit rundem, polygonalem oder grundsätzlich beliebigem Querschnitt umfassen und/oder Schlitze, beispielsweise radiale oder in Umfangsrichtung verlaufende Schlitze. Die Öffnungen können beispielsweise entlang eines Kreises um einen Durchstoßpunkt der Achse durch die senkrecht zur Achse angeordnete Bodenplatte verlaufen. Auch mehrere Reihen von radial versetzten Öffnungen sind denkbar. Die Bodenplatte kann beispielsweise, wie unten noch näher ausgeführt wird, eine aus einem Halbleitermaterial, beispielsweise aus Silizium, gefertigte Bodenplatte sein bzw. eine derartige Bodenplatte umfassen.

Alternativ oder zusätzlich zu Öffnungen können die Auffangvorrichtungen auch Fließkanäle umfassen, welche geschlossen oder teilweise geöffnet ausgestaltet sein können. Durch diese Fließkanäle kann die aus dem Ringspalt austretende Komponente der Ausgangssubstanz und/oder des Elektrolyten abfließen. Insbesondere kann es sich bei diesen Fließkanälen wiederum um in einem Halbleitermaterial geätzte Fließkanäle handeln, insbesondere in einer Bodenplatte geätzte Fließkanäle, wobei bezüglich der möglichen Ausgestaltungen der Bodenplatte auf die vorangehende Beschreibung der möglichen Ausgestaltung verwiesen werden kann. Das Halbleitermaterial kann beispielsweise ein Wafermaterial sein oder umfassen, insbesondere ein Wafermaterial mit einer Dicke zwischen 0,05 und 2 mm, beispielsweise eine Dicke von 0,1 mm. Bei dem Wafermaterial kann es sich auch um mehrere miteinander verbundene Wafermaterialien handeln, beispielsweise zwei, drei, vier oder mehr miteinander verbundene Ringe und/oder Scheiben. Das Wafermaterial kann, wie unten noch näher ausgeführt wird, auch ganz oder teilweise transparent ausgestaltet sein und/oder durch ein transparentes Material ersetzt sein, beispielsweise ein lichtdurchlässiges, transparentes Material.

Die Auffangvorrichtungen können insbesondere in fest vorgegebenen Winkelstellungen unterhalb des Ringspalts angeordnet sein bzw. an der Ausgangsseite des Ringspalts. Auf diese Weise kann eine bestimmte Auffangvorrichtung jeweils einer bestimmten Winkelstellung des Austritts aus dem Ringspalt zugeordnet sein. Die Auffangvorrichtungen können beispielsweise im Wesentlichen äquidistant entlang eines Auslasses des Ringspalts verteilt sein. Beispielsweise können 50 bis 200 Auffangvorrichtungen entlang dem Umfang verteilt sein, insbesondere 100 bis 200, vorzugsweise 120 Auffangvorrichtungen.

Die Auffangvorrichtungen können fluidisch mit dem rotierenden Auffangteil verbunden sein. Diese fluidische Verbindung kann beispielsweise durch Leitungen, Kanäle, Trichter oder eine Kombination der genannten und/oder anderer fluidischer Leitungselemente erfolgen.

Der rotierende Auffangteil kann beispielsweise mindestens einen unterhalb des Ringspalts und vorzugsweise auch unterhalb der Auffangvorrichtungen rotierenden Aufnehmer umfassen. Unter einem Aufnehmer ist dabei eine Vorrichtung zu verstehen, welche eingerichtet ist, um von den Auffangvorrichtungen aufgenommene Komponenten zu übernehmen, ohne dass bei dieser Übernahme ein Flüssigverlust in größerem Maßstab stattfinden sollte. Der Aufnehmer kann beispielsweise mindestens einen Auffangbecher und/oder Auffangtrichter umfassen. Vorzugsweise sind eine Mehrzahl von Aufnehmern, beispielsweise eine Mehrzahl von Auffangbechern und/oder Auffangtrichtern, vorgesehen, welche beispielsweise ebenfalls konzentrisch um die Achse angeordnet sein können und mit dem rotierenden Auffangteil um diese Achse rotieren können. Auf diese Weise können mittels der Auffangtrichter und/oder anders ausgestalteter Aufnehmer von den festen Auffangvorrichtungen aufgenommene Komponenten übernommen werden.

Der Aufnehmer kann seinerseits wiederum mit einer Auffangrinne fluidisch verbunden sein. Bei dieser Auffangrinne, welche vorzugsweise über den gesamten Umfang um die Achse umlaufend ausgestaltet sein kann, kann es sich beispielsweise um eine feste Auffangrinne handeln, also eine Auffangrinne, welche nicht rotiert und welche somit beispielsweise dem festen Auffangteil zugeordnet werden kann. Vorzugsweise ist mindestens eine Auffangrinne je Aufnehmer vorgesehen. Beispielsweise können die Auffangtrichter und/oder Auffangbecher, welche um die Achse rotieren, über eine oder mehrere Leitungen und/oder Düsen und/oder andere Arten von Leitungselementen mit der Auffangrinne verbunden sein, so dass beispielsweise die Leitungselemente innerhalb oder oberhalb der Auffangrinne rotieren und so die aufgenommene Komponente kontinuierlich in eine gemeinsame Auffangrinne abgeben können, während der Aufnehmer um die Achse rotiert.

Weitere vorteilhafte Ausgestaltungen können das Aufgabesystem betreffen. So kann dieses Aufgabesystem beispielsweise mindestens eine Aufgabedüse zur Aufgabe der Ausgangssubstanz in einer momentanen Winkelstellung des Aufgabesystems in den Ringspalt aufweisen. Da, wie unten ausgeführt wird, der Ringspalt sehr schmal ausgestaltet sein kann, sollte diese Aufgabe mit einer hohen Präzision erfolgen. Die Aufgabe kann insbesondere punktuell in einer bestimmten Winkelstellung, nämlich der jeweiligen momentanen Aufgabe-Winkelstellung des Aufgabesystems bzw. der Aufgabedüse, erfolgen. Unter einer punktuellen Aufgabe ist dabei eine Aufgabe in einer Winkelstellung zu verstehen, welche vorzugsweise bis auf weniger als 10°, vorzugsweise bis auf weniger als 5° und besonders bevorzugt bis auf weniger als 1° genau definiert ist. Es können auch mehrere Aufgabedüsen vorgesehen sein, welche beispielsweise in einer fest vorgegebenen Stellung zueinander orientiert sind und welche gemeinsam um die Achse rotieren. So können beispielsweise mindestens zwei Aufgabedüsen vorgesehen sein, insbesondere mindestens zwei mit unterschiedlichen Ausgangssubstanzen beaufschlagbare Aufgabedüsen.

Die mindestens eine Aufgabedüse soll eingerichtet sein, um den Ringspalt und/oder eine mit dem Ringspalt fluidisch verbundene Aufgaberille entlangzufahren. Beispielsweise kann die Aufgabedüse analog zu einer Nadel eines Plattenspielers ausgestaltet sein, so dass der momentane Aufgabepunkt beispielsweise kontinuierlich oder diskontinuierlich, beispielsweise mit einer konstanten oder variablen Winkelgeschwindigkeit, entlang der Aufgaberille und/oder der Aufgabeseite des Ringspalts fährt.

Weitere bevorzugte Ausgestaltungen der Ringspaltapparatur betreffen die Prozesskontrolle und/oder die Prozesssteuerung. Ein Vorteil der vorgeschlagenen Ringspaltapparatur, bei welcher der Ringspalt feststehend ausgestaltet ist und das Aufgabesystem rotiert, und vorzugsweise auch das Auffangsystem, besteht darin, dass eine größere Zahl von beeinflussbaren Freiheitsgraden besteht, über welche das Ergebnis der Separation beeinflusst werden kann. Dementsprechend wird vorgeschlagen, dass die Ringspaltapparatur mindestens einen Kontrollsensor zur Erfassung mindestens einer von dem Auffangsystem aufgenommenen Substanz aufweist. Insbesondere kann es sich bei dem mindestens einen Kontrollsensor um mindestens einen Kontrollsensor handeln, welcher mit der mindestens einen Auffangvorrichtung verbunden ist und/oder in diese integriert ist. Beispielsweise kann der Kontrollsensor in das feststehende Auffangteil integriert werden, beispielsweise in eine oder mehrere Öffnungen und/oder in einen oder mehrere Fließkanäle. Der Kontrollsensor ist somit vorzugsweise in einer festen Winkelstellung relativ zum Ringspalt angeordnet. Der Kontrollsensor kann beispielsweise eingerichtet sein, um eine oder mehrere Komponenten der Ausgangssubstanz und/oder des Elektrolyten qualitativ und/oder quantitativ nachzuweisen. Da bei rotierender Aufgabe der Ausgangssubstanz beispielsweise eine bestimmte Komponente zu bekannten Zeitpunkten und/oder in bekannten Winkelstellungen auftreten sollte, beispielsweise periodisch, kann der qualitative und/oder quantitative Nachweis dieser Komponente beispielsweise zum Kalibrieren, zum Steuern und/oder zum Regeln der Ringspaltapparatur bzw. des Verfahrens genutzt werden.

Es können beispielsweise 1 bis 10 Kontrollsensoren vorgesehen sein, wobei jedoch grundsätzlich eine beliebige Anzahl von Kontrollsensoren möglich ist, beispielsweise 6 Kontrollsensoren. Aus Kostengründen ist die Verwendung eines einzelnen oder lediglich weniger Kontrollsensoren bevorzugt.

Die Kontrollsensoren können grundsätzlich auf verschiedenen Messprinzipien basieren, beispielsweise auf einem optischen, elektrischen, chemischen oder anderen physikalischen und/oder chemischen und/oder biologischen Messprinzipien. Die Kontrollsensoren können beispielsweise speziell auf Eigenschaften einer oder mehrerer Komponenten eingerichtet sein, beispielsweise Absorptionseigenschaften, Brechungsindizes, elektrische Eigenschaften (beispielsweise elektrische Leitfähigkeit) oder ähnliche Eigenschaften, welche charakteristisch für eine oder mehrere Komponenten sind. Besonders bevorzugt ist die Verwendung optischer Kontrollsensoren, beispielsweise Kontrollsensoren, mit einem oder mehreren Emittern und/oder Empfängern im infraroten und/oder sichtbaren und/oder ultravioletten Spektralbereich. Besonders bevorzugt ist die Verwendung eines ultraviolettoptischen Sensors. Beispielsweise können eine oder mehrere, jedoch möglichst nicht alle, der Auffangvorrichtungen mit einem oder mehreren Kontrollsensoren ausgestaltet sein. Beispielsweise können Kontrollsensoren nur in bestimmten Winkelstellungen vorgesehen sein, um beispielsweise nur in diesen Winkelstellungen gezielt zu detektieren. Die Anbindung der Kontrollsensoren kann beispielsweise mittels elektrischer Verbindungen und/oder optischer Verbindungen erfolgen, beispielsweise Lichtleiterkabeln.

Besonders bevorzugt ist, wie oben dargestellt, eine Ausgestaltung des mindestens einen Kontrollsensors als optischer Kontrollsensor, beispielsweise als UV-Sensor. Allgemein können bei optischen Sensoren beispielsweise Absorption, Transmission, Streuung, Reflexion, Brechungsindexänderungen, Fluoreszenz, Phosphoreszenz oder ähnliche optische Eigenschaften zum Nachweis eingesetzt werden. Beispielsweise können integrierte optische Flusszellen (flow cells) verwendet werden. Die Kontrollsensoren können insbesondere miniaturisiert ausgestaltet sein und/oder können insbesondere als On-line-Sensoren ausgestaltet sein, welche On-line-Messergebnisse liefern. Diese On-line-Messergebnisse können direkt in die Prozesssteuerung einfließen.

Der Kontrollsensor kann insbesondere einen quer zur Strömungsrichtung in einer Messstrecke angeordneten optischen Kontrollsensor und/oder einen parallel zu einer Strömungsrichtung in einer Messstrecke angeordneten optischen Kontrollsensor aufweisen. Beispielsweise kann die Messstrecke eine Strecke in einem Fließkanal sein, insbesondere in einem feststehenden Auffangteil. Beispielsweise kann die Messstrecke innerhalb einer aus einem Halbleitermaterial hergestellten Bodenplatte angeordnet sein, wobei das Halbleitermaterial vorzugsweise zumindest teilweise transparent ausgestaltet ist. Durch diese Messstrecke können, beispielsweise in radialer Richtung relativ zur Achse und/oder in axialer Richtung, einzelne Komponenten der Ausgangssubstanz und/oder des Elektrolyten strömen. Dabei ist allgemein eine Detektion in einer Messstrecke parallel zur Strömungsrichtung bevorzugt, da sich auf diese Weise in der Regel längere Messstrecken und somit größere Signalhübe realisieren lassen und damit bessere Signal-zu-Rausch-Verhältnisse.

Sind einer oder mehrere Kontrollsensoren vorgesehen, so kann die Ringspaltapparatur insbesondere eingerichtet sein, um mindestens einen Antrieb entsprechend eines Sensorsignals des mindestens einen Kontrollsensors zu steuern und/oder zu regeln. Beispielsweise kann es sich bei diesem Antrieb um einen Antrieb einer Achse des Aufgabesystems und/oder eines Teils des Aufgabesystems handeln und/oder eine Achse des Auffangsystems und/oder eines Teils des Auffangsystems. Auf diese Weise kann beispielsweise eine Rotation des Auffangsystems relativ zu einer Rotation des Aufgabesystems gesteuert und/oder geregelt werden. Die Steuerung und/oder Regelung kann beispielsweise rein elektronisch erfolgen, beispielsweise mittels eines oder mehrerer Regler. Alternativ oder zusätzlich kann jedoch eine komplexere Regelung vorgesehen sein, beispielsweise über einen Computer und/oder eine andere Art von Datenverarbeitungsvorrichtung. Die Regelung kann beispielsweise auf eine Flanke und/oder einen Extremwert eines Sensorsignals erfolgen, beispielsweise ein maximales Signal einer bestimmten Komponente. Auf diese Weise kann beispielsweise die Ringspaltapparatur derart gesteuert und/oder geregelt werden, dass eine maximale Ausbeute an dieser bestimmten Komponente erzielt wird und/oder die Separation dieser Komponente aus der Ausgangssubstanz mit einer maximalen Effizienz erfolgt.

So ist die Ringspaltapparatur eingerichtet um ein Aufgabeantriebssystem zum Antreiben einer Rotation des Aufgabesystems unabhängig von einem Auffangantriebssystem zum Antreiben einer Rotation des Auffangsystems zu steuern und/oder zu regeln, insbesondere um einen Schlupf zwischen einer Aufgabewelle und einer Auffangwelle zu steuern und/oder zu regeln. Wie oben dargestellt, kann diese Steuerung und/oder Regelung insbesondere zum Zweck einer Regelung und/oder Kontrolle und/oder Einstellung einer bestimmten Produktqualität erfolgen. So kann beispielsweise ein Schlupf zwischen den beiden Wellen veränderbar ausgestaltet sein. Die Produktqualität kann beispielsweise eine Reinheit einer aufgefangenen Komponente der Ausgangssubstanz betreffen und/oder eine Konzentration dieser Komponente und/oder eine gewünschte Zusammensetzung der aufgefangenen Komponente, welche noch aus Teil-Komponenten zusammengesetzt sein kann. Verschiedene Ausgestaltungen sind möglich und für den Fachmann aufgrund der obigen Beschreibung leicht zu erschließen.

Weitere mögliche Ausgestaltungen der Erfindung betreffen die Art und Weise der Erzeugung des elektrischen Feldes. So kann es sich, wie oben dargestellt, bei dem elektrischen Feld insbesondere um ein axiales elektrisches Feld handeln. Dieses kann insbesondere unter Verwendung zweier oder mehrerer Elektroden erzeugt werden. Diese Elektroden können beispielsweise in den Elektrolyten eintauchen und/oder ganz oder teilweise in ein Gehäuse der Ringspaltapparatur, beispielsweise ein Gehäuse der Trennvorrichtung, integriert sein. Beispielsweise können die Elektroden mindestens eine aufgabeseitige Elektrode und mindestens eine auffangseitige Elektrode umfassen. Die auffangseitige Elektrode kann beispielsweise mindestens eine Ringelektrode umfassen. Die aufgabeseitige Elektrode kann ebenfalls eine oder mehrere Ringelektroden umfassen und/oder andere Arten von Elektroden, beispielsweise mindestens eine Stabelektrode, insbesondere mindestens eine in den Elektrolyten der Ringspaltapparatur hineinragende, d.h. eintauchende, Stabelektrode. Die Elektroden können, wie oben beschrieben, insbesondere innerhalb eines Gehäuses und/oder einer Kapselung der Trennvorrichtung und/oder der Ringspaltapparatur angeordnet sein.

Weitere mögliche Ausgestaltungen der Ringspaltapparatur können die Phase betreffen. Die stationäre Phase kann dabei grundsätzlich ein beliebiges Material umfassen, welches eingerichtet ist, um mit dem Elektrolyten und/oder der Ausgangssubstanz in Wechselwirkung zu treten, wobei durch die Art und Weise der Wechselwirkung beispielsweise eine Retention des Elektrolyten und/oder der Ausgangssubstanz beeinflusst bzw. bedingt wird. Grundsätzlich ist es bevorzugt, wenn die stationäre Phase beispielsweise Monolithe umfasst. Unter einem Monolithen ist dabei ein homogener, poröser Körper zu verstehen. Alternativ oder zusätzlich kann die stationäre Phase insbesondere sphärische Partikel umfassen. Wiederum alternativ oder zusätzlich kann die stationäre Phase auch eine oder mehrere Wände des Ringspalts selbst umfassen, beispielsweise Wände von Zylindern, welche den Ringspalt bilden. Alternativ oder zusätzlich kann die stationäre Phase beispielsweise auch Monolithe enthalten, so dass beispielsweise in einem Porensystem von Monolithen gearbeitet werden kann. In der vorgeschlagenen Ringspaltapparatur und in dem vorgeschlagenen Verfahren kann vorzugsweise vollständig ohne die Verwendung von Pumpen gearbeitet werden, da der Durchfluss vorzugsweise ausschließlich durch einen elektrischen Strom infolge des elektrischen Feldes bewirkt wird. Hierdurch entsteht praktisch kein Druckverlust, und es kann mit extrem kleinen Partikeln der stationären Phase und/oder in einem Porensystem, beispielsweise in einem Porensystem von Monolithen, gearbeitet werden.

Der Ringspalt selbst kann insbesondere eine Ringspaltweite zwischen 0,01 und 1 mm aufweisen. Unter einer Ringspaltweite ist dabei eine Spaltweite in einer Dimension in radialer Richtung, d.h. senkrecht zur Achse, zu verstehen. Der Ringspalt kann eine Ringspalthöhe, d.h. eine Dimension parallel zur Achse, aufweisen, welche beispielsweise zwischen 50 mm und 1000 mm liegen kann. Der Ringspalt kann einen Ringspaltdurchmesser aufweisen, welcher beispielsweise zwischen 200 mm und 500 mm liegen kann. Unter dem Ringspaltdurchmesser ist dabei der Abstand des Mittelpunkts des Spaltes von der Achse zu verstehen.

Weitere mögliche Ausgestaltungen der Erfindung betreffen die Ausgestaltung eines Aufgabeantriebssystems und/oder eines Auffangantriebssystems, welche oben bereits teilweise erwähnt wurden. So kann die Ringspaltapparatur beispielsweise mindestens ein Aufgabeantriebssystem zum Antreiben einer Rotation des Aufgabesystems und mindestens ein Auffangantriebssystem zum Antreiben einer Rotation des Auffangsystems aufweisen. Mittels des Auffangantriebssystems kann beispielsweise eine gleichsinnige Rotation des Aufgabesystems und des Auffangsystems angetrieben werden. Besonders bevorzugt ist es jedoch, wenn das Aufgabeantriebssystem und das Auffangantriebssystem mechanisch entkoppelbar sind, so dass diese, auch wenn eine Kopplung dieser Systeme möglich sein kann, auch getrennt betrieben, d.h. beispielsweise getrennt steuerbar und/oder regelbar, sind. Beispielsweise können das Auffangantriebssystem und/oder das Aufnahmeantriebssystem jeweils mindestens eine Welle auffassen. Diese Wellen können beispielsweise gekoppelt oder koppelbar sein und/oder auch ganz oder teilweise ineinander verlaufen. Diese Wellen können jedoch auch voneinander entkoppelbar oder entkoppelt ausgestaltet sein.

Weitere mögliche Ausgestaltungen der Ringspaltapparatur betreffen eine Kapselung. So kann die Ringspaltapparatur insbesondere mindestens eine zumindest die Trennvorrichtung ganz oder teilweise, vorzugsweise vollständig, umschließende druckfeste Kapselung umfassen. Neben der Trennvorrichtung können weitere Elemente der Ringspaltapparatur innerhalb der Kapselung angeordnet sein. Die Kapselung soll insbesondere dicht für Lösungsmittel und/oder Lösungsmitteldämpfe und/oder Elektrolyten und/oder Elektrolytdämpfe ausgestaltet sein. Vorzugsweise ist eine Druckfestigkeit von bis zu 10 bar oder mehr gegeben, damit die Trennvorrichtung auch mit einem Überdruck beaufschlagt werden kann. Dieser Überdruck kann zum einen eine Durchsatzerhöhung durch die Ringspaltapparatur bewirken. Andererseits kann durch eine Beaufschlagung mit Überdruck auch eine Gasblasenbildung, beispielsweise in einem Elektrolyten und/oder einem Lösungsmittel, welches auch Bestandteil des Elektrolyten sein kann, zumindest vermindert oder vollständig vermieden werden. Hierdurch lässt sich zum einen eine Explosionsgefahr vermeiden oder zumindest stark verringern und zum anderen lassen sich Störungen durch die Gasblasenbildung vermeiden. Die Kapselung kann beispielsweise derart ausgestaltet sein, dass innerhalb der Kapselung oberhalb des Ringspalts und unterhalb des Ringspalts voneinander getrennte Teilräume in der Kapselung ausgebildet sind, welche beispielsweise auch getrennt druckbeaufschlagt werden können. Alternativ kann auch lediglich oberhalb des Ringspalts, also an der Aufgabeseite, ein entsprechender Raum vorgesehen sein, welcher druckbeaufschlagt werden kann.

Die Kapselung, insbesondere im Bereich eines Teilraums an der Aufgabeseite der Ringspaltapparatur, kann insbesondere mindestens eine Zufuhröffnung aufweisen. Diese Zufuhröffnung kann eingerichtet sein, um mindestens eine der folgenden Zufuhren zu ermöglichen: eine Druckbeaufschlagung, beispielsweise eine Beaufschlagung mit einem Gasdruck und/oder einem Lösungsmitteldruck und/oder einem Elektrolytdruck; eine Zufuhr des Elektrolyten, insbesondere eine kontinuierliche Zufuhr des Elektrolyten; eine Zufuhr der Ausgangssubstanz, beispielsweise eine kontinuierliche Zufuhr der Ausgangssubstanz; eine Zufuhr von Lösungsmittel, insbesondere auch in diesem Fall wiederum eine kontinuierliche Zufuhr.

Wie oben dargestellt, können insbesondere auch das Aufgabesystem und/oder das Auffangsystem zumindest teilweise innerhalb der Kapselung angeordnet sein. Insbesondere kann das Aufgabesystem innerhalb der Kapselung angeordnet sein, beispielsweise in einem Teilraum oberhalb des Ringspalts, beispielsweise einem druckbeaufschlagten Teilraum. Alternativ oder zusätzlich kann jedoch auch das Auffangsystem ganz oder teilweise innerhalb der Kapselung angeordnet sein. So kann beispielsweise zumindest ein feststehender Auffangteil innerhalb der Kapselung angeordnet sein.

Die Ringspaltapparatur kann weiterhin mindestens eine Kühlvorrichtung umfassen. Die Kühlvorrichtung soll eingerichtet sein, um zumindest die Trennvorrichtung, beispielsweise im Bereich des Ringspalts, zu kühlen. So kann beispielsweise der Ringspalt vollständig oder teilweise von entsprechenden Kühlmittelleitungen umgeben sein, wobei ein Wärmeübertrag vom Ringspalt auf das in diesen Kühlmittelleitungen angeordnete, beispielsweise fließende, Kühlmittel möglich sein soll. Auf diese Weise kann eine Wärmeabfuhr überschüssiger Wärme aus der Trennvorrichtung, beispielsweise dem Ringspalt, erfolgen, so dass beispielsweise ebenfalls eine Gasblasenbildung in diesem Bereich wirksam verhindert werden kann.

Alternativ oder zusätzlich zu der oben beschriebenen Kapselung kann die Ringspaltapparatur weiterhin eine elektrische Abschirmung umfassen, welche auch ganz oder teilweise bauteilidentisch mit der Kapselung ausgestaltet sein kann. Die elektrische Abschirmung soll zumindest die Trennvorrichtung zumindest teilweise umschließen. Wiederum können darüber hinaus auch andere Komponenten der Ringspaltapparatur innerhalb der elektrischen Abschirmung angeordnet sein. So kann beispielsweise der Gesamtapparat vollständig oder teilweise durch die elektrische Abschirmung abgeschirmt sein. Beispielsweise kann der Gesamtapparat elektrische Spannungsträger umfassen, die innerhalb der elektrischen Abschirmung angeordnet sind und/oder separat abgeschottet sind, so dass eine betriebssichere Handhabung der Ringspaltapparatur gegeben sein kann. Elektrische Spannungsträger und/oder elektrische Vorrichtungen können in der elektrischen Abschirmung auch separat von der Trennvorrichtung abgeschirmt sein, beispielsweise durch eigene Teil-Abschirmungen.

Die beschriebene Ringspaltapparatur und das beschriebene Verfahren gemäß einer oder mehreren der oben beschriebenen Ausgestaltungen lassen sich insbesondere zur präparativen und vorzugsweise kontinuierlichen Abtrennung mindestens einer Komponente aus einer Ausgangssubstanz nutzen. Die Ringspaltapparatur und das vorgeschlagene Verfahren weisen gegenüber bekannten Vorrichtungen und Verfahren zahlreiche Vorteile auf. So lassen sich die Ringspaltapparatur und das vorgeschlagene Verfahren insbesondere zur kontinuierlichen Ringspaltelektrochromatographie (continuous annular electro-chromatography, CAEC) einsetzen. Eine derartige CAEC könnte den Durchsatz gegenüber vergleichbaren analytischen Chromatographieverfahren um ein Vielfaches erhöhen, beispielsweise um ein 1000-faches bis hin zu einem 20000-fachen, wohingegen die Effizienz von mehr als 100000 theoretischen Separationsstufen pro Meter aufrechterhalten wird. Die vorgeschlagene CAEC-Technologie ist somit geeignet, um Anwendungen bis hin zu einem Produktionsmaßstab, beispielsweise einem Produktionsmaßstab kleiner Chargen extrem hochwertiger Produkte, wie beispielsweise Pharmazeutika für klinische Versuche oder im größeren Maßstab, zu finden. Zudem stellt die CAEC einen extrem flexiblen Hochleistungsprozess zu erschwinglichen Kosten bereit. Zudem stellt die CAEC ein Verfahren dar, mittels dessen mit hoher Effizienz auch sehr komplexe Mischungen chemisch ähnlicher Verbindungen getrennt werden können, da diese die hohe Separationseffizienz der Kapillarelektrophorese mit der Anwendbarkeit von HPLC-Techniken auf ein weites Spektrum sowohl neutraler als auch geladener Komponenten vereinigt. Das Verfahren lässt sich mit hoher Effizienz sowohl in der chemischen als auch in der biochemischen und pharmazeutischen Industrie einsetzen. Durch Anwendung der erfindungsgemäßen Vorrichtung und des erfindungsgemäßen Verfahrens lässt sich aufgrund insbesondere der einfachen Apparatebedienung, beispielsweise der einfachen Übertragbarkeit und/oder Regelbarkeit, eine Produktentwicklung erheblich beschleunigen, so dass ein Anwender der Vorrichtung und/oder des Verfahrens in die Lage versetzt wird, beschleunigt Produkte auf den Markt zu bringen.

Insbesondere die oben vorgeschlagenen Vorrichtungsvarianten, in welchen Kontrollsensoren, beispielsweise miniaturisierte On-line-Sensoren, eingesetzt werden, lassen sich einsetzen, um die Ausbeute und Produktqualität gegenüber bekannten Verfahren und Vorrichtungen erheblich zu verbessern. Mittels dieser Ausgestaltungen ist beispielsweise eine Echtzeit-Reaktion auf externe Einflüsse und deren Änderungen möglich.

Die Anwendung eines axialen elektrischen Feldes auf einen feststehenden, d.h. sich nicht drehenden Ringspalt, in Kombination mit einer rotierenden Aufgabe der Ausgangssubstanz ermöglicht zudem die Verwendung von Ringspalten mit sehr kleinen Dimensionen, wodurch wiederum eine effizientere Wärmeabfuhr und dadurch wiederum die Möglichkeit der Verwendung höherer elektrischer Feldstärken eröffnet wird. Insgesamt lässt sich hierdurch der Durchsatz gegenüber bekannten Verfahren erheblich steigern.

Die geringen Ringspaltweiten, beispielsweise innerhalb der oben beschriebenen Bereiche, lassen sich insbesondere durch Mikrofunken-Erosion und/oder feinmechanische Fabrikationstechniken problemlos herstellen. Das Aufgabesystem, beispielsweise die mindestens eine oben genannte Aufgabedüse und/oder eine Feed-Line, lässt sich ebenfalls mit hoher Präzision herstellen. Hierbei können beispielsweise Halbleitertechniken eingesetzt werden, beispielsweise Halbleiter-Mikrostrukturen, insbesondere aus Silicium. Die Halbleitermaterialien können auch mit elektrischer Isolationswirkung versehen sein. Auf diese Weise lassen sich Hochpräzisions-Aufgabesysteme herstellen, wie auch die Auffangsysteme in entsprechender Technologie als hochpräzise Systeme ausgestaltet werden können.

Die Bildung störender Gasblasen kann, wie oben beschrieben, auf verschiedene Weise vermindert oder vermieden werden. So lässt sich beispielsweise eine effiziente Wärmeabfuhr realisieren. Beispielsweise lässt sich zu diesem Zweck ein ausreichender Strom an Elektrolytpuffer durch den Ringspalt realisieren. Alternativ oder zusätzlich können auch, wie oben beschrieben, eine oder mehrere Kühlvorrichtungen vorgesehen sein. Diese Kühlvorrichtungen können beispielsweise mikrostrukturierte Wärmetauscher umfassen.

Die oben beschriebenen Verwendungen von Kapselungen und/oder Abschirmungen lassen sich effizient einsetzen, um beispielsweise die Ringspaltapparatur auch im Hochspannungsbereich einsetzen zu können. So lässt sich die Apparatur beispielsweise ausgestalten für Spannungen bis hoch zu 30 kV und Drücke mit einer Stabilität über 10 bar. Als stationäre Phase können beispielsweise aus anderen Elektrophoreseverfahren bekannte stationäre Phasen übernommen werden und/oder neu entwickelte stationäre Phasen. So lassen sich, wie oben beschrieben, beispielsweise Silica-Monolithe einsetzen und/oder poröse Silica-Monolithe. Diese Monolithe lassen sich beispielsweise in einem Sol-Gel-Verfahren herstellen. Allgemein lassen sich auch poröse Silica-Partikel einsetzen. Zudem können die stationären Phasen Ionen-Austauschgruppen aufweisen, wie beispielsweise Carboxymethyl, 2-Diaminoethyl oder quaternäre Aminoethyl-Gruppen. Alternativ oder zusätzlich können verschiedene Cyclodextrin-Derivative für chirale Separationen eingesetzt werden. Wiederum alternativ oder zusätzlich lassen sich beispielsweise Alkylgruppen mit verschiedenen Kettenlängen einsetzen, insbesondere für Umkehr-Phasen-Chromatographien. Die stationären Phasen und/oder deren Bestandteile lassen sich beispielsweise mittels bekannter Immobilisationstechniken in dem Ringspalt immobilisieren.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine Schnittdarstellung eines ersten Ausführungsbeispiels einer erfindungsgemäßen Ringspaltapparatur;
- Figur 2: ein zweites Ausführungsbeispiel einer erfindungsgemäßen Ringspaltapparatur;
- Figur 3: eine fotografische Darstellung eines Auffangsystems eines Ausführungsbeispiels einer erfindungsgemäßen Ringspaltapparatur;
- Figur 4: eine vereinfachte perspektivische Darstellung von Teilen eines prinzipiellen Ausführungsbeispiels einer erfindungsgemäßen Ringspaltapparatur;
- Figur 5: eine Darstellung zweier möglicher Positionen eines Kontrollsensors;
- Figur 6: eine perspektivische Darstellung eines Ausführungsbeispiels eines feststehenden Auffangteils;
- Figuren 7 und 8: Schnittdarstellungen zweier Ausführungsbeispiele feststehender Auffangteile; und
- Figuren 9 bis 11: Messbeispiele von Elektrochromatogrammen verschiedener Ausgangssubstanzen.

### Ausführungsbeispiele

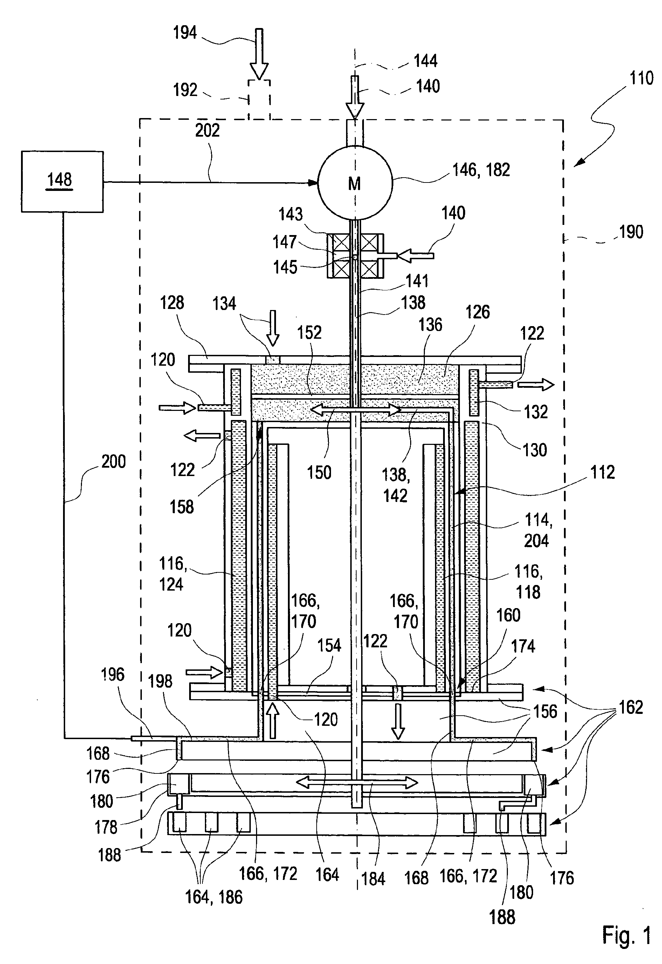

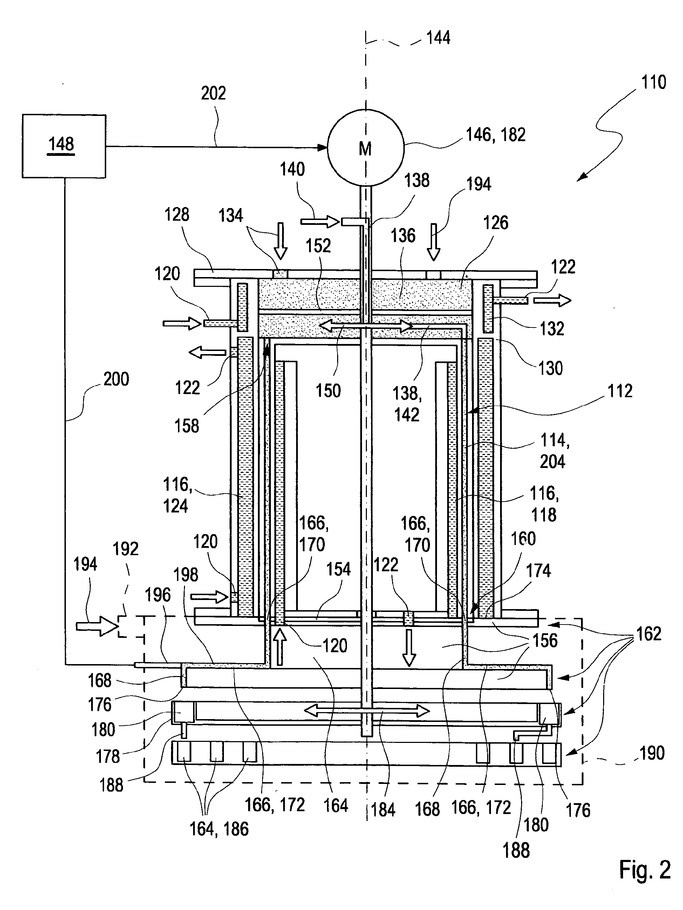

In den Figuren 1 und 2 sind in Schnittdarstellung von der Seite jeweils Ausführungsbeispiele erfindungsgemäßer Ringspaltapparaturen 110 dargestellt. Die Ringspaltapparatur 110 umfasst jeweils eine Trennvorrichtung 112 mit einem Ringspalt 114. Der Ringspalt 114 ist kreiszylinderförmig ausgestaltet und in der Regel aus Präzisionswerkstoffen hergestellt, wie beispielsweise Glas. Auf diese Weise lässt sich eine konstante Spaltweite über die Höhe des Ringspalts 114 hinweg sicherstellen. Alternativ oder zusätzlich kann der Ringspalt 114 auch durch Präzisionsschleifen hergestellt sein. Auf diese Weise kann an jeder Stelle der gleiche Durchfluss garantiert werden.

Die Trennvorrichtung 112 weist weiterhin eine Kühlvorrichtung 116 auf. Diese umfasst eine innere Kühlung 118 mit einem Kühlmittelzufluss 120 und einem Kühlmittelabfluss 122, mittels derer der Ringspalt 114 von innen her gekühlt werden kann. Weiterhin umfasst die Kühlvorrichtung 116 eine äußere Kühlung 124, ebenfalls mit einem Kühlmittelzufluss 120 und einem Kühlmittelabfluss 122, um den Ringspalt 114 von außen her umfangsseitig zu kühlen.

Die Trennvorrichtung 112 umfasst weiterhin oberhalb des Ringspalts 114 einen Aufgaberaum 126, der durch eine Deckelplatte 128 und ein Gehäuse 130, welches auch den Ringspalt 114 zylinderförmig umschließt, abgeschlossen ist, vorzugsweise flüssigkeitsdicht und besonders bevorzugt druckdicht. In dem Gehäuse 130 ist auch die äußere Kühlung 124 aufgenommen. Weiterhin ist in dem Gehäuse 130 im dargestellten Ausführungsbeispiel, ebenfalls als Teil der Kühlvorrichtung 116, eine obere Kühlung 132 aufgenommen, ebenfalls mit einem Kühlmittelzufluss 120 und einem Kühlmittelabfluss 122. Diese obere Kühlung 132 dient zur Kühlung des Aufgaberaums 126.

Der Aufgaberaum 126 kann über einen Elektrolytzufluss 134 mit einem Elektrolyten befüllt werden, welcher oft auch als Eluent bezeichnet wird. Dieser Elektrolyt ist in den Figuren 1 und 2 symbolisch mit der Bezugsziffer 136 bezeichnet. Verschiedene Beispiele von Elektrolyten 136 werden unten näher erläutert. Vom Aufgaberaum 126 aus kann der Elektrolyt 136 in den Ringspalt 114 eindringen. Die Beaufschlagung mit Elektrolyt 136 kann beispielsweise unter erhöhtem Druck erfolgen, beispielsweise einem Überdruck von bis zu 10 bar.

Weiterhin umfasst die Ringspaltapparatur 110 in dem dargestellten Ausführungsbeispiel ein Aufgabesystem 138 zum Einbringen einer Ausgangssubstanz in den Ringspalt 114. Die Ausgangssubstanz ist in den Figuren 1 und 2 symbolisch mit der Bezugsziffer 140 bezeichnet. Das Aufgabesystem 138 umfasst in dem dargestellten Beispiel eine Aufgabedüse 142 in Form einer beispielsweise rechtwinklig gebogenen, im Wesentlichen radial verlaufenden Hohlnadel. Mittels dieser Aufgabedüse 142 kann punktuell in einer bestimmten Winkelstellung die Ausgangssubstanz 140 in den Ringspalt 114 eingebracht werden. Die Aufgabedüse 142 ist in dem Aufgaberaum 126 angeordnet, welcher vorzugsweise vollständig mit Elektrolyt 136 gefüllt ist und ist eingerichtet, um um eine Achse 144 der Trennvorrichtung 112 zu rotieren. Zu diesem Zweck weist das Aufgabesystem 138 weiterhin ein Aufgabeantriebssystem 146 auf, welches beispielsweise über eine Steuerung 148 gesteuert werden kann. Die Rotation der Aufgabedüse 142 um die Achse 144 ist in den Figuren symbolisch mit dem Rotationspfeil 150 gekennzeichnet.

Die Versorgung der Aufgabedüse 142 mit der Ausgangssubstanz 140 kann auf verschiedene Weisen erfolgen, wobei in Figur 1 zwei möglich Alternativen angedeutet sind. So kann zum einen beispielsweise die Ausgangssubstanz 140 seitlich in eine Hohlwelle 141 des Aufgabeantriebssystems 146 eingespeist werden, dort kurzfristig innerhalb dieser Hohlwelle 141 geleitet werden, um dann in die Aufgabedüse 142 geleitet zu werden. Die Einspeisung, insbesondere senkrecht zur Welle des Aufgabeantriebssystems 146, kann beispielsweise mittels einer Gleitdichtung 143 und/oder einen Wellendichtring (insbesondere einen Radialwellendichtring) und/oder eine Axialdichtung erfolgen. Die Gleitdichtung 143 kann beispielsweise eine Öffnung 145 in der Hohlwelle 141 und einen die Hohlwelle 141 umgebenden, mit der Ausgangssubstanz 140 befüllbaren Ringraum 147 umfassen, wie in Figur 1 angedeutet ist. Alternativ oder zusätzlich kann auch eine Einspeisung parallel zu dieser Hohlwelle 141 erfolgen, wie in Figur 1 durch den nach unten weisenden Pfeil für die Ausgangssubstanz 140 angedeutet ist. Eine derartige Einspeisung ist technisch vergleichsweise einfach zu realisieren. Beispielsweise kann mit einer rotierenden, dichten Verbindung eine Einspeisung in ein aus einem Motor des Aufgabeantriebssystems 146 herausragendes Ende der Hohlwelle 141 erfolgen. Die weitere Führung innerhalb der Hohlwelle 141 und die anschließende Einleitung in die Aufgabedüse 142 können analog zur senkrechten Einspeisung erfolgen. Auch in der unten beschriebenen Figur 2 ist eine entsprechende Ausgestaltung möglich. Grundsätzlich sind auch andere Arten der Einspeisung der Ausgangssubstanz 140 in die Aufgabedüse 142 denkbar.

Wie oben dargestellt, kann das Einbringen des Elektrolyten 136 in den Ringspalt 114 beispielsweise unter Druck oder auch drucklos, d.h. bei Normaldruck, erfolgen. Der Elektrolyt 136 und mit diesem die Ausgangssubstanz 140 wandern in dem Ringspalt 114 vorzugsweise nicht oder nicht ausschließlich aufgrund eines Druckunterschiedes in axialer Richtung in den Figuren 1 und 2 nach unten, sondern aufgrund eines axialen elektrischen Feldes. Zu diesem Zweck sind in der Ringspaltapparatur 110 in den Figuren 1 und 2 eine aufgabeseitige Elektrode 152 und eine auffangseitige Elektrode 154 vorgesehen. Während die aufgabeseitige Elektrode 152 als Ringelektrode und/oder Stabelektrode innerhalb des Aufgaberaums 126 angeordnet ist und dort in den Elektrolyten 136 eintaucht, ist die auffangseitige Elektrode 154 in dem dargestellten Ausführungsbeispiel am entgegengesetzten Ende des Ringspalts 114 in eine Bodenplatte 156 integriert und beispielsweise als Ringelektrode ausgestaltet.

Der Ringspalt 114 weist somit an seinem in den Figuren 1 und 2 oberen Ende, also dem dem Aufgaberaum 126 zuweisenden Ende, eine Aufgabeseite 158 auf, und an seinem gegenüberliegenden Ende eine Auffangseite 160. An der Auffangseite 160 ist ein Auffangsystem 162 vorgesehen, welches in dem dargestellten Ausführungsbeispiel mehrteilig ausgestaltet ist. So weist das Auffangsystem 162 einen feststehenden Auffangteil 164 auf, welcher zumindest teilweise bauteilidentisch ist mit der Bodenplatte 156 und welcher dicht mit dem Gehäuse 130 verbunden ist. Dieser feststehende Auffangteil 164 umfasst eine Reihe von Auffangvorrichtungen 166, welche in einer oder mehreren vorgegebenen, festen Winkelstellungen um die Achse 144 aus dem Ringspalt 114 austretenden Elektrolyten 136 und Ausgangssubstanz 140 bzw. Komponenten dieser Ausgangssubstanz 140 aufnehmen. Im Folgenden werden dabei in den Figuren symbolisch die einzelnen Komponenten der Ausgangssubstanz 140 mit der Bezugsziffer 168 bezeichnet. Dass diese Komponenten 168 gegebenenfalls noch mit Elektrolyt 136 gemischt sein können, wird dabei im Folgenden nicht beachtet.

Die Auffangvorrichtungen 166 können beispielsweise auf der dem Ringspalt 114 zuweisenden Seite der Bodenplatte 156 eine oder mehrere Öffnungen 170 umfassen. Beispielsweise kann die Bodenplatte 156 ganz oder teilweise als Halbleiterstruktur ausgestaltet sein, so dass diese Öffnungen 170, welche beispielsweise äquidistant entlang eines dem Ringspalt 114 entsprechenden Kreises in der Bodenplatte 156 verteilt sein können, beispielsweise durch ein Ätzverfahren hergestellt werden können.

Weiterhin umfassen die Auffangvorrichtungen 166 in dem dargestellten Ausführungsbeispiel eine Mehrzahl von Fließkanälen 172, welche beispielsweise ebenfalls in Halbleiterstrukturen der Bodenplatte 156 geätzt sein können. Diese Fließkanäle 172, von denen in den Figuren 1 und 2 lediglich zwei dargestellt sind, wobei alternativ jedoch auch lediglich ein Fließkanal 172 oder mehr als zwei Fließkanäle 172 vorgesehen sein können, können beispielsweise ebenfalls durch ein Ätzverfahren hergestellt sein. Die Fließkanäle 172 verlaufen dabei in dem dargestellten Ausführungsbeispiel winklig in der Bodenplatte 162, wobei die Bodenplatte 156 beispielsweise mehrteilig ausgestaltet sein kann.

Die Auffangvorrichtungen 166 sind eingerichtet, um die Komponenten 168 an einem Auslass 174 des Ringspalts 114 in bestimmten, fest vorgegebenen Winkelstellungen aufzunehmen und zu radial weiter außen, also weiter von der Achse 144 beabstandeten Sekundärauslässen 176 auf der Unterseite des feststehenden Auffangteils 164 zu führen. Dort sind die Sekundärauslässe 176 fluidisch durch eine Freifallstrecke verbunden mit einem rotierenden Auffangteil 178. Dieser rotierende Auffangteil 178 umfasst eine Mehrzahl von Aufnehmern 180, welche beispielsweise als Auffangtrichter ausgestaltet sein können und welche in gerade aktuellen Winkelstellungen des rotierenden Auffangteils 178 aus den Sekundärauslässen 176 austretende Komponenten 168 der Ausgangssubstanz 140 aufnehmen können. In dem Ausführungsbeispiel in den Figuren 1 und 2 sind zwei derartige Aufnehmer 180 dargestellt. Es kann jedoch alternativ auch lediglich ein einzelner Aufnehmer 180 vorgesehen sein, beispielsweise mit einer fest vorgegebenen Aufnehmerbreite, welche beispielsweise einen Winkelbereich einer Winkelstellung um die Achse 144 von nicht mehr als 10°, vorzugsweise von nicht mehr als 5°, abdeckt.

Der rotierende Auffangteil 178 ist beispielsweise über ein Auffangantriebssystem 182 antreibbar. Dieses Auffangantriebssystem 182 kann beispielsweise, wie in den Figuren 1 und 2 angedeutet, ganz oder teilweise bauteilidentisch mit dem Aufgabeantriebssystem 146 sein. Es können jedoch auch vollständig unterschiedliche Antriebssysteme vorgesehen sein. Das Auffangantriebssystem 182 ist derart ausgestaltet, dass eine in den Figuren mit der Bezugsziffer 184 bezeichnete Auffangrotation um die Achse 144 unabhängig von der Aufgaberotation 150 ausgestaltet werden kann und/oder mit einer Schlupfregelung zwischen diesen beiden Rotationen 150, 184.

Die Aufnehmer 180 sind wiederum in dem dargestellten Ausführungsbeispiel in den Figuren 1 und 2 fluidisch verbunden mit einer Mehrzahl von Auffangrinnen 186, welche Bestandteil des feststehenden Auffangteils 164 sein können. Diese Auffangrinnen 186 können beispielsweise konzentrisch um die Achse 144 angeordnet sein. Dabei kann beispielsweise jedem Aufnehmer 180 eine Auffangrinne 186 zugeordnet sein. Die fluidische Verbindung zwischen den Aufnehmern 180 und den zugehörigen Auffangrinnen 186 kann beispielsweise über - gegebenenfalls winklig verlaufende - Leitungsstücke 188 erfolgen, welche Bestandteil des rotierenden Auffangteils 178 sein können und welche beispielsweise jeweils den Inhalt eines Aufnehmers 180 einer bestimmten Auffangrinne 186 zuordnen. Von diesen Auffangrinnen 186 aus können beispielsweise entsprechende fluidische Verbindungen zu Auffangbehältnissen bestehen, in welchen beispielsweise einzelne Komponenten 168 aufgenommen werden können.

Die beiden Ausführungsbeispiele gemäß den Figuren 1 und 2 umfassen weiterhin eine druckfeste Kapselung 190. Während in dem Ausführungsbeispiel gemäß Figur 1 die Kapselung 190 die Trennvorrichtung vollständig umschließt, umschließt diese Kapselung 190 in dem Ausführungsbeispiel gemäß Figur 2 lediglich die Auffangseite 160 der Trennvorrichtung 112, insbesondere den feststehenden Auffangteil 164 und den rotierenden Auffangteil 178. Weiterhin können von der Kapselung 190 weitere Komponenten umschlossen werden.

In dem Ausführungsbeispiel gemäß Figur 1 umfasst die Kapselung zudem eine Zufuhröffnung 192, welche eine in Figur 1 symbolisch mit der Bezugsziffer 194 bezeichnete Druckbeaufschlagung ermöglichen kann. Alternativ oder zusätzlich können weitere Zufuhröffnungen 192 vorgesehen sein, beispielsweise für die Zufuhr weiterer Medien, wie beispielsweise des Elektrolyten 136 und/oder der Ausgangssubstanz 140. Die Antriebssysteme 146, 182, welche in Figur 1 innerhalb der Kapselung 190 angeordnet sind, können auch ganz oder teilweise außerhalb dieser Kapselung 190 angeordnet sein. Die Kapselung 190 bewirkt beispielsweise, dass mittels eines Überdrucks innerhalb der Kapselung 190 eine Blasenbildung, beispielsweise in dem Elektrolyten 136, vermieden oder zumindest verringert werden kann. Auch in dem Ausführungsbeispiel gemäß Figur 2 kann eine entsprechende Zufuhröffnung 192 vorgesehen sein, welche beispielsweise eine derartige Druckbeaufschlagung 194 ermöglicht.

In den Ausführungsbeispielen in den Figuren 1 und 2 ist weiterhin in mindestens einer Auffangvorrichtung 166 mindestens ein Kontrollsensor 196 vorgesehen. Dieser Kontrollsensor 196 ist in den Figuren exemplarisch in einem der Fließkanäle 172 angeordnet. Beispielsweise kann es sich, wie unten näher erläutert wird, bei dem Kontrollsensor 196 um einen optischen Kontrollsensor handeln, welcher in einer - beispielsweise radial verlaufenden - Messstrecke 198 mindestens eine Eigenschaft des durch diese Messstrecke 198 tretenden Mediums, beispielsweise der Komponente 168 und/oder des Elektrolyten 136, misst. Beispielsweise sollten bei gleichförmig rotierendem Aufgabesystem 138 bestimmte Komponenten 168 in regelmäßigen Zeitabständen in dem jeweiligen Fließkanal 172 auftreten, so dass ein periodisches Sensorsignal des Kontrollsensors 196 erzeugt wird. Aus den Eigenschaften dieses, in den Figuren 1 und 2 mit der Bezugsziffer 200 bezeichneten Sensorsignals kann beispielsweise mittels der Steuerung 148 über ein oder mehrere Steuersignale 202 eine Ansteuerung der Antriebssysteme 146, 182 erfolgen, beispielsweise eine Schlupfregelung. Auf diese Weise kann beispielsweise die Auffangrotation 184 entsprechend gesteuert werden, so dass die jeweilige momentane Winkelstellung der Aufnehmer 180 jeweils optimal auf die aufzunehmende Komponente 168 angepasst werden kann.

Im Betrieb wird die Ringspaltapparatur 110 derart eingesetzt, dass über das Aufgabesystem 138 rotierend und punktuell die Ausgangssubstanz 140 in den Ringspalt 114 eingebracht wird. Gemeinsam mit dem Elektrolyten 136 wandert die Ausgangssubstanz 140, getrieben durch das elektrische Feld, in axialer Richtung zur Auffangseite 160. In dem Ringspalt 114 ist eine stationäre Phase 204 vorgesehen, welche mit den einzelnen Komponenten 168 der Ausgangssubstanz 140 in unterschiedlicher Weise in Wechselwirkung tritt. Bei dieser stationären Phase 204 kann es sich beispielsweise einfach um die Wände des Ringspalts 114 handeln. Alternativ kann der Ringspalt 114 jedoch auch mit weiteren Substanzen als stationäre Phase gefüllt werden, wobei Beispiele dieser stationären Phase 204 oben gegeben wurden und nachfolgend noch näher ausgeführt werden.

Aufgrund der unterschiedlichen Wechselwirkung mit der stationären Phase 204 durchlaufen die einzelnen Komponenten 168 der Ausgangssubstanz 140 den Ringspalt 114 mit unterschiedlicher Geschwindigkeit. Dementsprechend treten diese Komponenten 168 an der Auffangseite 160 in unterschiedlichen Winkelstellungen aus dem Auslass 174 des Ringspalts 114 aus. Soll beispielsweise eine bestimmte Komponente 168 aus der Ausgangssubstanz 140 präparativ und kontinuierlich abgetrennt werden, so kann der rotierende Auffangteil 178 mit seinen Aufnehmern 180 beispielsweise derart angesteuert werden, dass stets ein bestimmter Aufnehmer 180 sich gerade an derjenigen Stelle unterhalb der Sekundärauslässe 176 befindet, an welcher die gewünschte Komponente 168 gerade austritt. Zu diesem Zweck können das Aufgabesystem 138 und der rotierende Auffangteil 178 gleichsinnig um die Achse 144 rotieren, wobei mittels des Kontrollsensors 196 eine entsprechende Regelung beispielsweise eines Winkelversatzes zwischen den Antriebssystemen 146, 182 und/oder eines Schlupfes erfolgen kann. Auf diese Weise kann kontinuierlich beispielsweise eine bestimmte Komponente 168 von einem rotierenden Aufnehmer 180 aufgenommen und über eine bestimmte Auffangrinne 186 in einen entsprechenden Zwischenspeicher abgeleitet werden. Die Antriebe 146, 182 können beispielsweise in Form von einer oder mehreren ineinander verlaufenden Hohlwellen ausgestaltet sein und können beispielsweise Präzisionsmotoren für den Antrieb dieser Wellen umfassen.

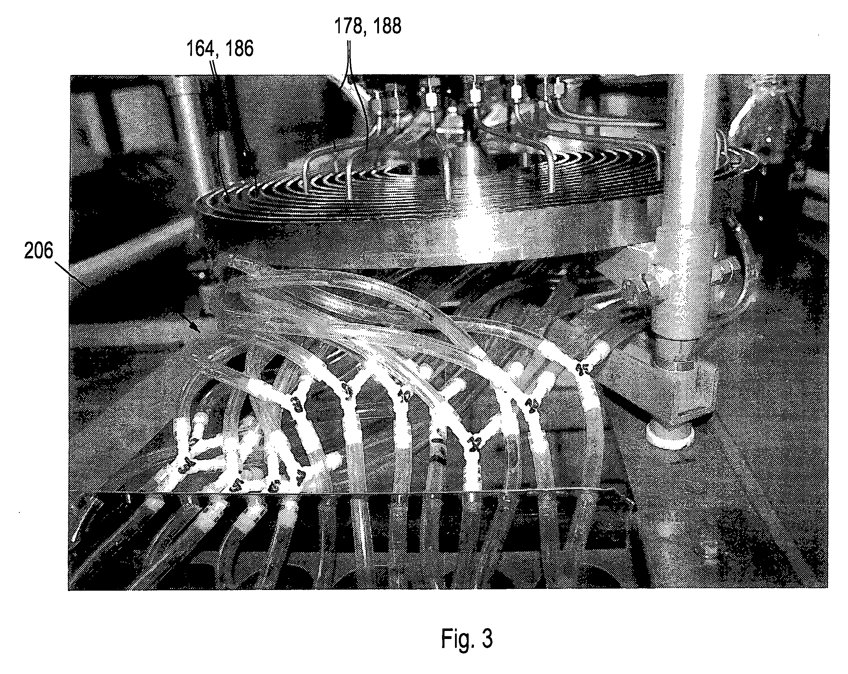

In Figur 3 sind in einer fotografischen Detailaufnahme nochmals die Auffangrinnen 186 dargestellt. Wie aus dieser Aufnahme erkennbar ist, können die Auffangrinnen 186 beispielsweise über ein entsprechendes Schlauchsystem 206 mit einzelnen Auffangbehältern und/oder einem Rohrleitungssystem verbunden sein, beispielsweise um kontinuierlich eine oder mehrere Komponenten 168 der Ausgangssubstanz 140 bereitzustellen zu können. Weiterhin ist in der Aufnahme gemäß Figur 3 erkennbar, dass die Leitungsstücke 188, welche die (in der Abbildung nicht dargestellten) Aufnehmer 180 fluidisch mit den Auffangrinnen 186 verbinden, analog zu Schallplattennadeln über oder innerhalb der Auffangrinnen 186 auf kreisförmigen Bahnen bewegt werden. Auf diese Weise kann, wie oben dargestellt, jeweils der Inhalt eines Aufnehmers 180 einer bestimmten Auffangrinne 186 zugeordnet werden.

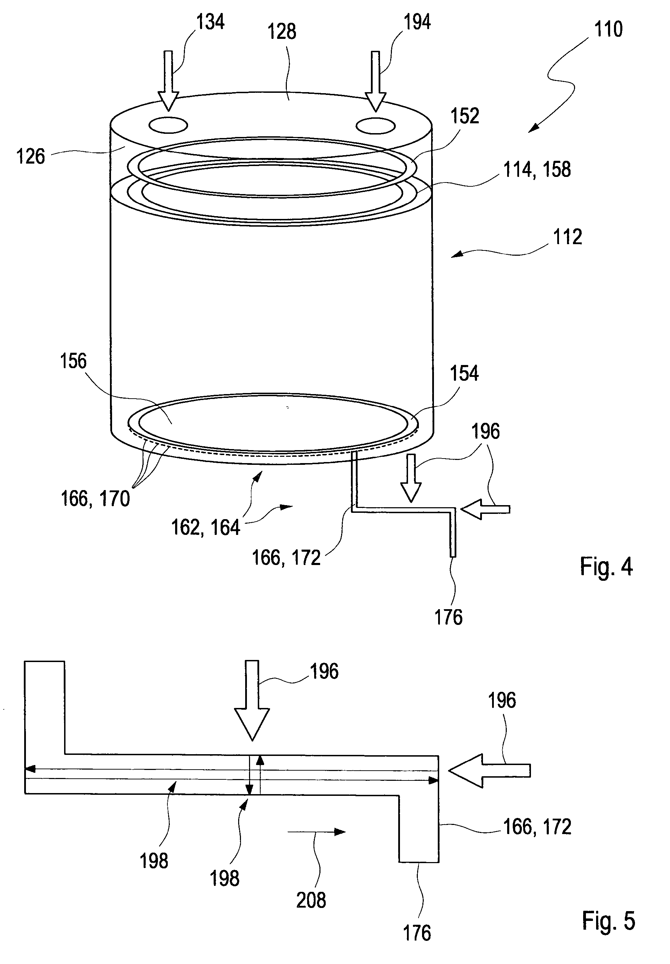

In Figur 4 ist schematisch nochmals in einer perspektivischen Darstellung ein Teil der Ringspaltapparatur 110, beispielsweise gemäß dem Ausführungsbeispiel in den Figuren 1 oder 2, gezeigt. Dementsprechend kann für die einzelnen Komponenten der Ringspaltapparatur 110 exemplarisch auf die obige Beschreibung verwiesen werden. Insbesondere geht aus der schematischen Darstellung gemäß Figur 4 eine Auslassstruktur des Auffangsystems 162 hervor. Dabei ist lediglich ein Teil des feststehenden Auffangteils 164 gezeigt.

Wie oben dargestellt, umfasst der feststehende Auffangteil 164 eine Mehrzahl von Auffangvorrichtungen 166, welche beispielsweise eine Mehrzahl von Öffnungen 170 in einer Bodenplatte 156 der Trennvorrichtung 112 umfassen können. Beispielsweise können die Öffnungen 170 120 Löcher oder Schlitze in der Bodenplatte 156 umfassen, welche beispielsweise äquidistant oder in vorgegebenen Winkelstellungen entlang des Umfangs eines unterhalb des Ringspalts 114 verlaufenden Kreises 114 angeordnet sind. An diese Öffnungen 170 schließen sich in der Bodenplatte 156, wie oben dargestellt, ein oder mehrere Fließkanäle 172 an, von denen in Figur 4 lediglich einer dargestellt ist.

Die Ringspaltbreite des Ringspalts 114 beträgt beispielsweise 100 µm. Über diesem Ringspalt 114 ist, wie anhand der Figuren 1 und 2 beschrieben, der Aufgaberaum 126 angeordnet, welcher beispielsweise bis zur Deckelplatte 128 mit Elektrolyt 136 angefüllt sein kann.

Die Zusammensetzung der durch den Fließkanal 172 fließenden Substanz variiert periodisch. Diese Zusammensetzung kann beispielsweise mittels des Kontrollsensors 196 qualitativ und/oder quantitativ aufgenommen werden und liefert beispielsweise ein Chromatogramm der Ausgangssubstanz 140. Dieses Chromatogramm wandert entsprechend der eingestellten Umdrehungen der Zu- und Abfuhr (beispielsweise 1 bis 2 Umdrehungen pro Stunde) im Kreis herum und sollte nach einer bestimmten Zeit exakt auf einer bestimmten Umfangsposition der Öffnungen 170 zu finden sein. Beispielsweise sollte zu einer fest vorgegebenen Zeit jeweils eine bestimmte Komponente 168 der Ausgangssubstanz 140 am Sekundärauslass 176 des in Figur 4 dargestellten Fließkanals 172 eintreffen. Um den rotierenden Auffangteil 178, welcher in Figur 4 nicht dargestellt ist, mit seinem mindestens einen Aufnehmer 180 entsprechend steuern zu können, muss dieser zeitliche Zusammenhang bekannt sein. Dieser Zusammenhang kann jedoch beispielsweise durch äußere Einflüsse, welche nicht in allen Fällen bekannt sind, gestört sein. Dementsprechend wird vorgeschlagen, mindestens einen der Fließkanäle 172 mit einem Kontrollsensor 196 zu versehen, welcher in Figur 5 in zwei möglichen Positionen angedeutet ist.

Der Kontrollsensor 196 kann beispielsweise ein optischer Kontrollsensor 196 sein, welcher in einer Messstrecke 198 senkrecht zu einer Strömungsrichtung 208 des Mediums im Fließkanal 172 (oberer Kontrollsensor 196) oder parallel zu der Strömungsrichtung 208 mindestens eine Eigenschaft des Mediums im Fließkanal 172 erfasst. Auch andere Ausgestaltungen der Messstrecke 198 sind jedoch grundsätzlich möglich. Die Messstrecke 198 kann beispielsweise in einem radial verlaufenden Abschnitt des Fließkanals 172 (Querkanal) verlaufen.

Die Anordnung der Messstrecke 198 senkrecht zur Strömungsrichtung 208 bietet den Nachteil, dass das Messvolumen und damit die Detektionsempfindlichkeit gegenüber der Anordnung der Messstrecke 198 parallel zur Strömungsrichtung 208 verringert ist. Allerdings können sich durch eine senkrechte Messstrecke 198 vereinfachte Justagemöglichkeiten ergeben. Die Anbindung der Kontrollsensoren 176 an ein oder mehrere analytische Geräte kann beispielsweise über Lichtleiterkabel erfolgen. Der Nachweis der mindestens einen Eigenschaft kann beispielsweise eine Transmission, eine Absorption, eine Streuung, eine Fluoreszenz oder ähnliche Nachweisverfahren, beispielsweise im ultravioletten und/oder infraroten und/oder sichtbaren Spektralbereich umfassen. Auf diese Weise kann eine On-line-Analytik und/oder On-line-Sensorik realisiert werden.

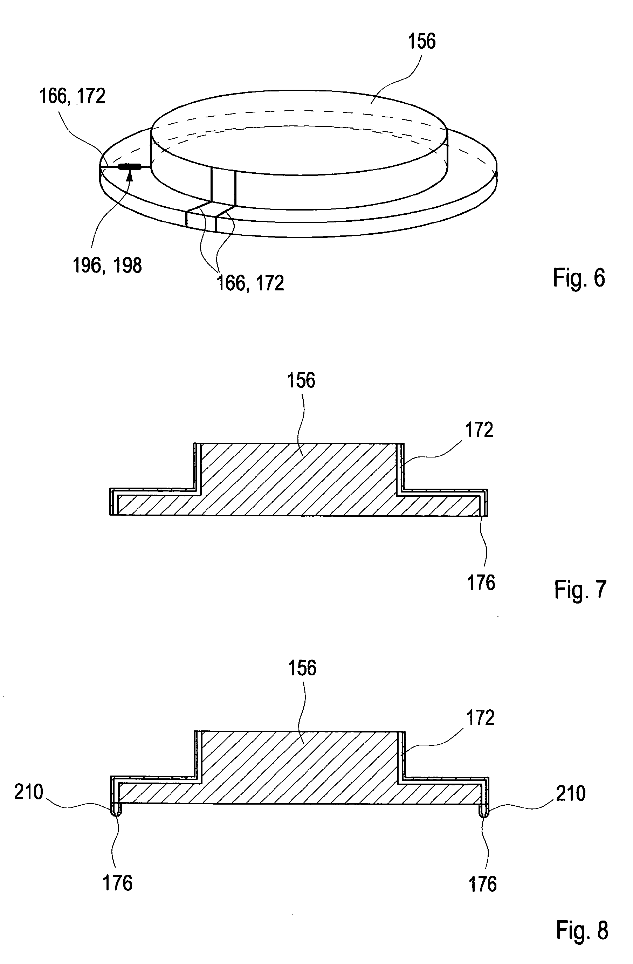

In den Figuren 6 bis 8 sind verschiedene Ausgestaltungen der Fließkanäle 172 dargestellt. Wie beispielsweise aus einer perspektivischen Darstellung in Figur 6 hervorgeht, kann die Bodenplatte 156, in welcher die Fließkanäle 172 aufgenommen sind, beispielsweise als Bodenplatte 156 aus einem oder mehreren Wafermaterialien ausgestaltet sein. Beispielsweise kann die Bodenplatte 156 zwei, drei oder mehr miteinander verbundene Ringe, beispielsweise eines Halbleitermaterials, umfassen, beispielsweise eines Wafermaterials mit 0,1 mm Dicke. Die Fließkanäle 172 können beispielsweise in bestimmten Winkelstellungen oder über den gesamten Umfang hinweg integriert sein. An einer oder mehreren bestimmten Positionen entlang des Umfangs, d.h. in einem oder mehreren bestimmten Fließkanälen 172, wird der Kontrollsensor 196 integriert. Sind beispielsweise 120 Fließkanäle 172 vorgesehen, von denen in Figur 6 lediglich drei dargestellt sind, so sind die Kontrollsensoren 196 vorzugsweise nicht in allen Fließkanälen 172 integriert. So können beispielsweise maximal sechs Kontrollsensoren 196 vorgesehen sein, wobei jedoch eine geringere Anzahl, beispielsweise lediglich ein einzelner Kontrollsensor 196, aus Kostengründen angestrebt wird. Im Bereich der Kontrollsensoren 196 und/oder der Messstrecken 198 kann das Wafermaterial der Bodenplatte 156 beispielsweise durch ein lichtdurchlässiges, insbesondere UV-neutrales Material ersetzt werden. Sowohl der radiale Verlauf der Messstrecke 198 als auch der senkrechte Verlauf der Messstrecke 198 können in Figur 6 realisiert werden.

In den Figuren 7 und 8 sind nochmals zwei mögliche Beispiele des Verlaufs der Fließkanäle 172 in einer Schnittdarstellung durch die Bodenplatte 156 gezeigt. Während das Ausführungsbeispiel gemäß Figur 7 dem bereits in den Figuren 1 und 2 gezeigten Ausführungsbeispiel der Bodenplatte 156 entspricht, weisen die Sekundärauslässe 176 im in Figur 8 gezeigten Ausführungsbeispiel zusätzlich Kapillaren 210 mit verengten, gewinkelten Auslässen auf, welche ein verbessertes Abtropfen des aus den Sekundärauslässen 176 austretenden Fluids gewährleisten können.

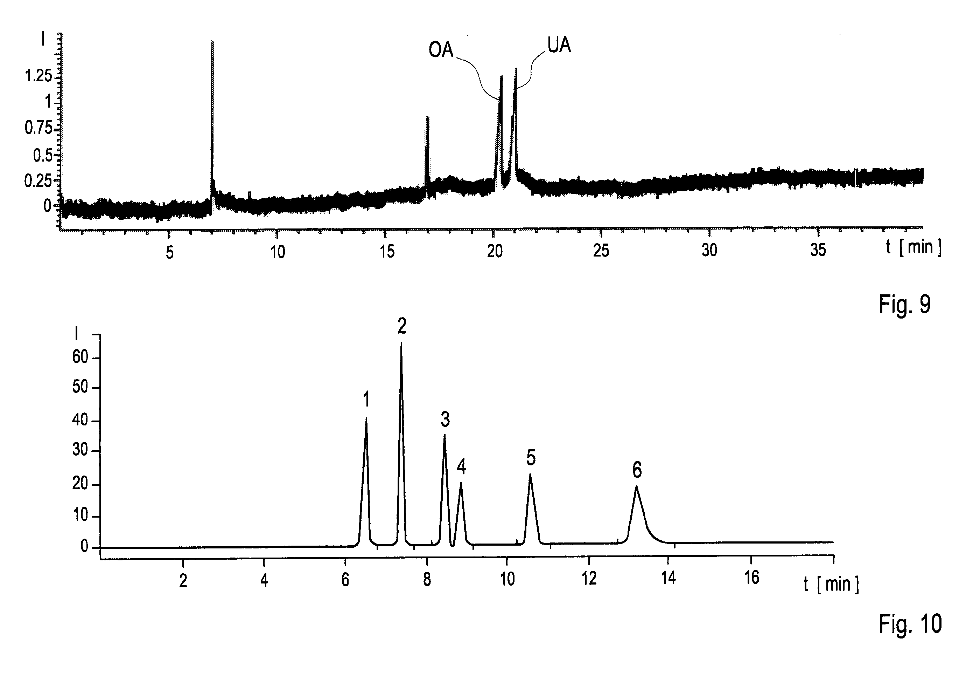

In den Figuren 9 bis 11 sind Beispiele realer Elektrochromatogramme bestimmter Ausgangssubstanzen 140 gezeigt. Aufgetragen ist dabei jeweils in beliebigen Einheiten ein Sensorsignal I eines Kontrollsensors 196 als Funktion der Zeit t in Minuten. Die Messungen wurden dabei mit einer Ringspaltapparatur 110 mit einem zu den Figuren 1 und 2 ähnlichen Aufbau aufgenommen.

### Beispiel 1

In Figur 9 ist ein Beispiel dargestellt, bei welchem als Eluent bzw. Elektrolyt 136 eine Mischung aus einem Tris-Puffer und Methanol im Verhältnis 1:4 und 20 mM Cyclodextrin verwendet wurde, mit einem pH-Wert von insgesamt 7. Cyclodextrin im Eluenten wurde dabei als zusätzlicher Komplexbildner zugesetzt. Als Ausgangssubstanz 140 wurde eine Mischung Ursolsäure (UA) und Oleanolsäure (OA) verwendet, die mit 0,15 g/l im Eluenten gelöst war. Als Spannung zwischen den Elektroden 152, 154 wurden 30 kV gewählt. Die Temperatur der Trennvorrichtung 112 wurde auf ca. 20 °C eingestellt. Die Aufgabedüse 142 (Feednadel) bewegte sich mit einer Geschwindigkeit von 0,15 Grad/s analog zu einer Nadel eines Schallplattenspielers in oder oberhalb des Ringspalts 114. Die Mischung der Ausgangssubstanz 140 wurde dabei kontinuierlich zugeführt.

Aus Figur 9 ist erkennbar, dass nach ca. 20 Minuten, gemessen ab dem Beginn der Aufgabe der Ausgangssubstanz 140, im Kontrollsensor 196 ein erster Peak verzeichnet wird, welcher der Oleanolsäure (OA) zugeordnet werden kann. Ca. 1 Minute später tritt ein Peak der Ursolsäure (UA) auf. Dementsprechend ergibt sich für Oleanolsäure ein Austrittswinkel von ca. 180°, wohingegen der Ursolsäure ein Austrittswinkel von 189° zuzuordnen ist. Bei diesen Austrittswinkeln können diese Komponenten der Ausgangssubstanz 140 der Ringspaltapparatur 110 entnommen werden, so dass mittels des in Figur 9 gezeigten Elektrochromatogramms beispielsweise die Ansteuerung des Auffangantriebssystems 182 entsprechend vorjustiert werden kann. Eine On-line-Kontrolle bzw. Steuerung kann dann beispielsweise kontinuierlich über den Kontrollsensor 196 optional erfolgen.

### Beispiel 2

In Figur 10 ist ein Elektrochromatogramm eines zweiten Ausführungsbeispiels einer Elektrochromatographie dargestellt, mit einem zu Figur 9 analogen Messaufbau. Als Eluent wurden dabei 5 mM Essigsäure und 3 mM Triethylamin in Acetonitril verwendet, mit einem pH-Wert des Eluenten von insgesamt 5. Als Ausgangssubstanz 140 wurde ein Multikomponentengemisch von Nukleosiden verwendet, welche in Eluent gelöst wurden. Die Ringspaltapparatur 110 wurde mit einer Spannung zwischen den Elektroden 152, 154 von 25 kV betrieben, bei einer Temperatur von 20 °C und einer Winkelgeschwindigkeit der Aufgabedüse von 0,15 Grad/s. Als stationäre Phase 204 wurden in diesem Ausführungsbeispiel C18-Partikel mit einer Korngröße von d = 3 µm mittels eines Slurryverfahrens eingebracht.

In Figur 10 sind im Elektrochromatogramm einzelne Peaks erkennbar, welche mit den Nummern 1 bis 6 bezeichnet wurden. Diese Nummern konnten den folgenden Komponenten 168 zugeordnet werden: 1 = Cytidin, 2 = Uridin, 3 = Inosin, 4 = Guanosin, 5 = Thymidin und 6 = Adenosin. Diese Zuordnung konnte beispielsweise mittels einer externen Analytik erfolgen. In Tabelle 1 sind die diesen Komponenten 168 zuzuordnenden Austrittswinkel aufgelistet, entsprechend der oben genannten Winkelgeschwindigkeit und der in Figur 10 erkennbaren Zeitpunkte der einzelnen Peaks:

**Tabelle 1: Austrittswinkel verschiedener Komponenten in Figur 10**

| Komponente | Cytidin (1) | Uridin (2) | Inosin (3) | Guanosin (4) | Thymidin (5) | Adenosin (6) |
|---|---|---|---|---|---|---|
| Austrittswirikel | 58,5° | 67,5° | 76,5° | 81° | 94,5° | 121,5° |

Auch mittels dieses Elektrochromatogramms können beispielsweise Winkelstellungen und Rotationsgeschwindigkeiten der einzelnen Aufnehmer 180 entsprechend eingestellt werden, um eine oder mehrere der genannten Komponenten 168 der Ausgangssubstanz 140 kontinuierlich aufzunehmen.

### Beispiel 3

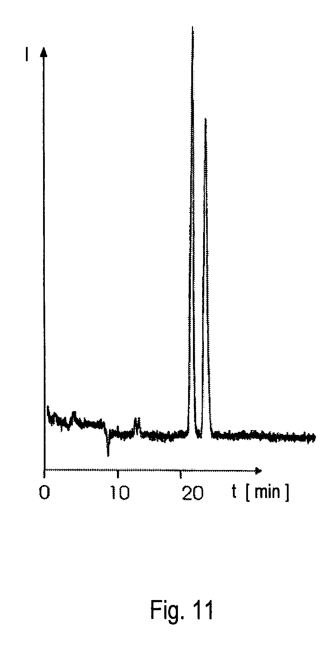

In einem in Figur 11 dargestellten dritten Beispiel wurde als Eluent Methanol und 2-(N-Morpholino)ethansulfonsäure mit einem pH-Wert von 6 eingesetzt. Als Ausgangssubstanz 140 wurden verschiedene Enantiomere von Hexobarbital eingesetzt, die in dem Eluenten gelöst wurden. Als Anlagenparameter wurden wiederum eine Spannung von 25 kV zwischen den Elektroden 152, 154 und eine Temperatur von 20 °C gewählt. Wiederum wurde die Winkelgeschwindigkeit der Aufgabedüse 142 zu 0,15 Grad/s gewählt.

Bei Hexobarbital handelt es sich um ein Injektionsnarkotikum. Bei dem verwendeten Beispiel wurde ein mit Cyclodextrin modifizierter Monolith als stationäre Phase 204 in den Ringspalt 112 eingespritzt und polymerisiert. Durch die unterschiedlichen Wechselwirkungen der Enantiomere mit dem modifizierten Monolithen erfolgte eine Auftrennung der Ausgangssubstanz 140 in die einzelnen Enantiomere. Dementsprechend sind in Figur 11 zwei einzelne Enantiomer-Peaks zu erkennen, welche Austrittswinkeln von 192° und 212° entsprechen. Bei diesen Austrittswinkeln können die einzelnen Enantiomere abgezogen werden.

### Bezugszeichenliste

- 110: Ringspaltapparatur
- 112: Trennvorrichtung
- 114: Ringspalt
- 116: Kühlvorrichtung
- 118: innere Kühlung
- 120: Kühlmittelzufluss
- 122: Kühlmittelabfluss
- 124: äußere Kühlung
- 126: Aufgaberaum
- 128: Deckelplatte
- 130: Gehäuse
- 132: obere Kühlung
- 134: Elektrolytzufluss
- 136: Elektrolyt
- 138: Aufgabesystem
- 140: Ausgangssubstanz
- 141: Hohlwelle
- 142: Aufgabedüse
- 143: Gleitdichtung
- 144: Achse
- 145: Öffnung
- 146: Aufgabeantriebssystem
- 147: Ringraum
- 148: Steuerung
- 150: Aufgaberotation
- 152: aufgabeseitige Elektrode
- 154: auffangseitige Elektrode
- 156: Bodenplatte
- 158: Aufgabeseite
- 160: Auffangseite
- 162: Auffangsystem
- 164: feststehender Auffangteil
- 166: Auffangvorrichtungen
- 168: Komponenten der Ausgangssubstanz
- 170: Öffnungen
- 172: Fließkanäle
- 174: Auslass
- 176: Sekundärauslässe
- 178: rotierender Auffangteil
- 180: Aufnehmer
- 182: Auffangantriebssystem
- 184: Auffangrotation
- 186: Auffangrinnen
- 188: Leitungsstücke
- 190: Kapselung
- 192: Zufuhröffnung
- 194: Druckbeaufschlagung
- 196: Kontrollsensor
- 198: Messstrecke
- 200: Sensorsignal
- 202: Steuersignale
- 204: stationäre Phase
- 206: Schlauchsystem
- 208: Strömungsrichtung
- 210: Kapillaren

## Patentansprüche

1. Ringspaltapparatur (110) zur Durchführung einer Kapillarelektrochromatographie, umfassend mindestens eine Trennvorrichtung (112) mit mindestens einem feststehenden Ringspalt (114), wobei der Ringspalt (114) zumindest teilweise mit mindestens einer stationären Phase (204) angefüllt ist und mit mindestens einem Elektrolyten (136) befüllbar ist, wobei die Ringspaltapparatur (110) mindestens ein Aufgabesystem (138) zum Einbringen einer Ausgangssubstanz (140) in den Ringspalt (114) aufweist, wobei die Ringspaltapparatur (110) weiterhin ein Auffangsystem (162) zum Aufnehmen mindestens einer in der Trennvorrichtung (112) abgetrennten Komponente (168) der Ausgangssubstanz (140) und/oder des Elektrolyten (136) aufweist, wobei das Aufgabesystem (138) eingerichtet ist, um um eine Achse (144) der Trennvorrichtung (112) zu rotieren und das Auffangsystem (162) eingerichtet ist, um zumindest teilweise um die Achse (144) der Trennvorrichtung (112) zu rotieren, wobei Auffangsystem (162) und Aufgabesystem (138) unabhängig voneinander rotierbar sind und wobei die Ringspaltapparatur (110) weiterhin eingerichtet ist, um den Ringspalt (114) mit einem elektrischen Feld mit mindestens einer axialen Komponente zu beaufschlagen.

2. Ringspaltapparatur (110) nach dem vorhergehenden Anspruch, wobei das Auffangsystem (162) eingerichtet ist, um gleichsinnig zum Aufgabesystem (138) zu rotieren.

3. Ringspaltapparatur (110) nach dem vorhergehenden Anspruch, wobei das Auffangsystem (162) einen feststehenden Auffangteil (164) und einen rotierenden Auffangteil (178) umfasst.

4. Ringspaltapparatur (110) nach dem vorhergehenden Anspruch, wobei der feststehende Auffangteil (164) eine Mehrzahl von Auffangvorrichtungen (166) zum im Wesentlichen gleichzeitigen getrennten Auffangen von in unterschiedlichen Winkelstellungen aus dem Ringspalt (114) austretenden Komponenten (168) der Ausgangssubstanz (140) und/oder des Elektrolyten (136) aufweist.

5. Ringspaltapparatur (110) nach dem vorhergehenden Anspruch, wobei die Auffangvorrichtungen (166) eine oder mehrere der folgenden Elemente umfassen: Öffnungen (170) in einer Bodenplatte (156), insbesondere einer aus einem Halbleitermaterial gefertigten Bodenplatte (156); Fließkanäle (172), insbesondere in einem Halbleitermaterial geätzte Fließkanäle (172), insbesondere in einer Bodenplatte (156) geätzte Fließkanäle (172).

6. Ringspaltapparatur (110) nach einem der beiden vorhergehenden Ansprüche, wobei die Auffangvorrichtungen (166) im Wesentlichen äquidistant entlang eines Auslasses (174) des Ringspalts (114) verteilt sind.

7. Ringspaltapparatur (110) nach einem der drei vorhergehenden Ansprüche, wobei die Auffangvorrichtungen (166) fluidisch verbunden sind mit dem rotierenden Auffangteil (178).

8. Ringspaltapparatur (110) nach einem der fünf vorhergehenden Ansprüche, wobei der rotierende Auffangteil (178) mindestens einen unterhalb des Ringspalts (114) und vorzugsweise unterhalb der Auffangvorrichtungen (166) rotierenden Aufnehmer (180), vorzugsweise mindestens einen Auffangtrichter und/oder mindestens einen Auffangbecher, umfasst.

9. Ringspaltapparatur (110) nach dem vorhergehenden Anspruch, wobei der Aufnehmer (180) mit mindestens einer Auffangrinne (186) fluidisch verbunden ist, vorzugsweise einer festen Auffangrinne (186), vorzugsweise mindestens einer Auffangrinne (186) je Aufnehmer (180).

10. Ringspaltapparatur (110) nach einem der vorhergehenden Ansprüche, wobei das Aufgabesystem (138) mindestens eine Aufgabedüse (142) zur Aufgabe, insbesondere zur punktuellen Aufgabe, der Ausgangssubstanz (140) in einer momentanen Winkelstellung des Aufgabesystems (138) in den Ringspalt (114) aufweist.

11. Ringspaltapparatur (110) nach einem der vorhergehenden Ansprüche, weiterhin aufweisend mindestens einen Kontrollsensor (196) zur Erfassung mindestens einer von dem Auffangsystem (162) aufgenommenen Substanz.

12. Ringspaltapparatur (110) nach dem vorhergehenden Anspruch, wobei der Kontrollsensor (196) einen quer zu einer Strömungsrichtung (208) in einer Messstrecke (198) angeordneten optischen Kontrollsensor (196) und/oder einen parallel zu einer Strömungsrichtung (208) in einer Messstrecke (198) angeordneten optischen Kontrollsensor (196) aufweist.

13. Ringspaltapparatur (110) nach einem der beiden vorhergehenden Ansprüche, wobei die Ringspaltapparatur (110) weiterhin eingerichtet ist, um mindestens einen Antrieb (146, 182) entsprechend eines Sensorsignals (200) des Kontrollsensors (196) zu steuern und/oder zu regeln.

14. Ringspaltapparatur (110) nach dem vorhergehenden Anspruch, wobei die Ringspaltapparatur (110) eingerichtet ist, um ein Aufgabeantriebssystem (146) zum Antreiben einer Rotation des Aufgabesystems (138) und/oder ein Auffangantriebssystem (182) zum Antreiben einer Rotation des Auffangsystems (162) zu steuern und/oder zu regeln, insbesondere einen Schlupf zwischen einer Aufgabewelle und einer Auffangwelle, insbesondere zum Zweck einer Regelung und/oder Kontrolle und/oder Einstellung einer Produktqualität.

15. Ringspaltapparatur (110) nach einem der vorhergehenden Ansprüche, wobei zur Erzeugung des elektrischen Feldes, insbesondere eines axialen elektrischen Feldes, mindestens eine aufgabeseitige Elektrode (152) und mindestens eine auffangseitige Elektrode (154) vorgesehen ist.

16. Ringspaltapparatur (110) nach einem der vorhergehenden Ansprüche, wobei die stationäre Phase (204) eine oder mehrere der folgenden stationären Phasen (204) umfasst: Monolithe; sphärische Partikel; eine Wand des Ringspalts (114).

17. Ringspaltapparatur (110) nach einem der vorhergehenden Ansprüche, wobei der Ringspalt (114) eine oder mehrere der folgenden Dimensionen aufweist: eine Ringspaltweite zwischen 0.01 und 1 mm; eine Ringspalthöhe zwischen 50 mm und 1000 mm; einen Ringspaltdurchmesser zwischen 200 mm und 500 mm.

18. Ringspaltapparatur (110) nach einem der vorhergehenden Ansprüche, weiterhin aufweisend mindestens ein Aufgabeantriebssystem (146) zum Antreiben einer Rotation des Aufgabesystems (138) und mindestens ein Auffangantriebssystem (182) zum Antreiben einer Rotation des Auffangsystems (162), wobei das Aufgabeantriebssystem (146) und das Auffangantriebssystem (182) mechanisch entkoppelbar sind.

19. Ringspaltapparatur (110) nach einem der vorhergehenden Ansprüche, weiterhin umfassend mindestens eine die Trennvorrichtung (112) zumindest teilweise umschließende druckfeste Kapselung (190).

20. Ringspaltapparatur (110) nach einem der vorhergehenden Ansprüche, weiterhin umfassend mindestens eine Kühlvorrichtung (116), wobei die Kühlvorrichtung (116) eingerichtet ist, um zumindest die Trennvorrichtung (112) zu kühlen.

21. Ringspaltapparatur (110) nach einem der vorhergehenden Ansprüche, weiterhin umfassend mindestens eine zumindest die Trennvorrichtung (112) umschließende elektrische Abschirmung.

22. Verwendung einer Ringspaltapparatur (110) nach einem der vorhergehenden Ansprüche zur präparativen und vorzugsweise kontinuierlichen Abtrennung mindestens einer Komponente (168) aus einer Ausgangssubstanz (140).

23. Verfahren zur Separation mindestens einer Komponente (168) aus einer Ausgangssubstanz (140), wobei eine Ringspaltapparatur (110) nach einem der vorhergehenden Vorrichtungsansprüchen verwendet wird, wobei die Ringspaltapparatur (110) mindestens eine Trennvorrichtung (112) mit mindestens einem feststehender Ringspalt (114) umfasst, wobei der Ringspalt (114) zumindest teilweise mit mindestens einer stationären Phase (204) angefüllt ist und mit mindestens einem Elektrolyten (136) befüllt wird, wobei die Ausgangssubstanz (140) in den Ringspalt (114) eingebracht wird, wobei mindestens eine in der Trennvorrichtung (112) abgetrennte Komponente (168) der Ausgangssubstanz (140) und/oder des Elektrolyten (136) aufgenommen wird, wobei zum Einbringen der Komponente (168) ein Aufgabesystem (138) verwendet wird, welches um eine Achse (144) der Trennvorrichtung (112) rotiert und zum Aufnehmen ein Auffangsystem (162) verwendet wird, welches eingerichtet ist, um zumindest teilweise um die Achse (144) der Trennvorrichtung (112) zu rotieren, wobei Auffangsystem (162) und Aufgabesystem (138) unabhängig voneinander rotierbar sind und wobei der Ringspalt (114) mit einem elektrischen Feld mit mindestens einer axialen Komponente (168) beaufschlagt wird.

## Claims

1. Annular gap apparatus (110) for carrying out capillary electrochromatography, comprising at least one separator (112) with at least one fixed annular gap (114), wherein the annular gap (114) is at least partially filled with at least one stationary phase (204) and is fillable with at least one electrolyte (136), wherein the annular gap apparatus (110) has at least one feeding system (138) for introducing a starting substance (140) into the annular gap (114), wherein the annular gap apparatus (110) furthermore has a collecting system (162) for receiving at least one component (168), separated in the separator (112), of the starting substance (140) and/or of the electrolyte (136), wherein the feeding system (138) is set up to rotate about an axis (144) of the separator (112) and the collecting system (162) is set up to rotate at least partially about the axis (144) of the separator (112), wherein the collecting system (162) and feeding system (138) are rotatable independently of one another and wherein the annular gap apparatus (110) is further set up to subject the annular gap (114) to an electrical field with at least one axial component.

2. Annular gap apparatus (110) according to the preceding claim, wherein the collecting system (162) is set up to rotate in the same direction as the feeding system (138).

3. Annular gap apparatus (110) according to the preceding claim, wherein the collecting system (162) comprises a fixed collecting part (164) and a rotating collecting part (178).

4. Annular gap apparatus (110) according to the preceding claim, wherein the fixed collecting part (164) has a plurality of collecting devices (166) for the substantially simultaneous separate collection of components (168) of the starting substance (140) and/or of the electrolyte (136) that emerge from the annular gap (114) in different angular positions.

5. Annular gap apparatus (110) according to the preceding claim, wherein the collecting devices (166) comprise one or more of the following elements: openings (170) in a baseplate (156), in particular a baseplate (156) manufactured from a semiconductor material; flow channels (172), in particular flow channels (172) etched in a semiconductor material, in particular flow channels (172) etched in a baseplate (156).

6. Annular gap apparatus (110) according to either of the two preceding claims, wherein the collecting devices (166) are distributed substantially equidistantly along an outlet (174) of the annular gap (114).

7. Annular gap apparatus (110) according to one of the three preceding claims, wherein the collecting devices (166) are fluidically connected to the rotating collecting part (178).

8. Annular gap apparatus (110) according to one of the five preceding claims, wherein the rotating collecting part (178) comprises at least one receiver (180), preferably at least one collecting funnel and/or at least one collecting vessel, rotating beneath the annular gap (114) and preferably beneath the collecting devices (166).

9. Annular gap apparatus (110) according to the preceding claim, wherein the receiver (180) is fluidically connected to at least one collecting trough (186), preferably a fixed collecting trough (186), preferably at least one collecting trough (186) per receiver (180).

10. Annular gap apparatus (110) according to one of the preceding claims, wherein the feeding system (138) has at least one feeding nozzle (142) for feeding, in particular for selectively feeding, the starting substance (140) into the annular gap (114) in an instantaneous angular position of the feeding system (138).

11. Annular gap apparatus (110) according to one of the preceding claims, furthermore having at least one monitoring sensor (196) for sensing at least one substance received by the collecting system (162).

12. Annular gap apparatus (110) according to the preceding claim, wherein the monitoring sensor (196) has an optical monitoring sensor (196) arranged transversely to a direction of flow (208) in a measurement section (198) and/or an optical monitoring sensor (196) arranged parallel to a direction of flow (208) in a measurement section (198).

13. Annular gap apparatus (110) according to either of the two preceding claims, wherein the annular gap apparatus (110) is furthermore set up to control and/or regulate at least one drive (146, 182) in accordance with a sensor signal (200) from the monitoring sensor (196).

14. Annular gap apparatus (110) according to the preceding claim, wherein the annular gap apparatus (110) is set up to control and/or regulate a feeding drive system (146) for driving a rotation of the feeding system (138) and/or a collecting drive system (182) for driving a rotation of the collecting system (162), in particular to control and/or regulate slip between a feeding shaft and a collecting shaft, in particular in order to regulate and/or monitor and/or set a product quality.

15. Annular gap apparatus (110) according to one of the preceding claims, wherein, in order to generate the electrical field, in particular an axial electrical field, provision is made of at least one electrode (154) on the feeding side and at least one electrode (154) on the collecting site.

16. Annular gap apparatus (110) according to one of the preceding claims, wherein the stationary phase (204) comprises one or more of the following stationary phases (204): monoliths; spherical particles; a wall of the annular gap (114).

17. Annular gap apparatus (110) according to one of the preceding claims, wherein the annular gap (114) has one or more of the following dimensions: an annular gap width of between 0.01 and 1 mm; an annular gap height of between 50 mm and 1000 mm; an annular gap diameter of between 200 mm and 500 mm.

18. Annular gap apparatus (110) according to one of the preceding claims, furthermore comprising at least one feeding drive system (146) for driving a rotation of the feeding system (138) and at least one collecting drive system (182) for driving a rotation of the collecting system (162), wherein the feeding drive system (146) and the collecting drive system (182) are mechanically uncouplable.

19. Annular gap apparatus (110) according to one of the preceding claims, furthermore comprising at least one pressure-resistant casing (190) at least partially enclosing the separator (112).

20. Annular gap apparatus (110) according to one of the preceding claims, furthermore comprising at least one cooling device (116), wherein the cooling device (116) is set up to cool at least the separator (112).

21. Annular gap apparatus (110) according to one of the preceding claims, furthermore comprising at least one electrical shielding means enclosing at least the separator (112).

22. Use of an annular gap apparatus (110) according to one of the preceding claims for the preparative and preferably continuous separation of at least one component (168) from a starting substance (140).

23. Method for separating at least one component (168) from a starting substance (140), wherein an annular gap apparatus (110) according to one of the preceding device claims is used, wherein the annular gap apparatus (110) comprises at least one separator (112) with at least one fixed annular gap (114), wherein the annular gap (114) is at least partially filled with at least one stationary phase (204) and is filled with at least one electrolyte (136), wherein the starting substance (140) is introduced into the annular gap (114), wherein at least one component (168), separated in the separator (112), of the starting substance (140) and/or of the electrolyte (136) is received, wherein, in order to introduce the component (168), use is made of a feeding system (138) which rotates about an axis (144) of the separator (112) and is used to receive a collecting system (162) which is set up to rotate at least partially about the axis (144) of the separator (112), wherein the collecting system (162) and feeding system (138) are rotatable independently of one another and wherein the annular gap (114) is subjected to an electrical field with at least one axial component (168).

## Revendications

1. Appareil à fente annulaire (110) pour réaliser une électrochromatographique capillaire, comprenant au moins un dispositif de séparation (112) ayant au moins une fente annulaire fixe (114), dans lequel la fente annulaire (114) est au moins partiellement remplie d'au moins une phase stationnaire (204) et peut être remplie d'au moins un électrolyte (136), dans lequel l'appareil à fente annulaire (110) présente au moins un système de chargement (138) pour l'introduction d'une substance de départ (140) dans la fente annulaire (114), dans lequel l'appareil à fente annulaire (110) présente en outre un système de réception (162) pour la réception d'au moins l'un des constituants (168) de la substance de départ (140) et/ou de l'électrolyte (136), séparés dans le dispositif de séparation (112), dans lequel le système de chargement (138) est conçu de manière à tourner autour d'un axe (144) du dispositif de séparation (112) et le système de réception (162) est conçu de manière à tourner, au moins partiellement, autour de l'axe (144) du dispositif de séparation (112), dans lequel le système de réception (162) et le système de chargement (138) peuvent être mis en rotation indépendamment l'un de l'autre et dans lequel l'appareil à fente annulaire (110) est en outre conçu pour soumettre la fente annulaire (114) à un champ électrique ayant au moins une composante axiale.

2. Appareil à fente annulaire (110) selon la revendication précédente, dans lequel le système de réception (162) est conçu de manière tourner dans le même sens que le système de chargement (138).

3. Appareil à fente annulaire (110) selon la revendication précédente, dans lequel le système de réception (162) comprend une partie de réception fixe (164) et une partie de réception tournante (178).

4. Appareil à fente annulaire (110) selon la revendication précédente, dans lequel la partie de réception fixe (164) comporte une pluralité de dispositifs de réception (166) de manière recevoir séparément et sensiblement simultanément des constituants (168) de la substance de départ (140) et/ou de l'électrolyte (136), sortant à des positions angulaires différentes de la fente annulaire (114).

5. Appareil à fente annulaire (110) selon la revendication précédente, dans lequel les dispositifs de réception (166) comprennent un ou plusieurs des éléments suivants : des ouvertures (170) ménagées dans une plaque de fond (156), notamment une plaque de fond (156) réalisée à partir d'un matériau semi-conducteur ; des canaux d'écoulement (172), notamment des canaux d'écoulement (172) gravés dans un matériau semi-conducteur, notamment des canaux d'écoulement (172) gravés dans une plaque de fond (156).

6. Appareil à fente annulaire (110) selon l'une quelconque des deux revendications précédentes, dans lequel les dispositifs de réception (166) sont répartis de manière sensiblement équidistante le long d'une sortie (174) de la fente annulaire (114).

7. Appareil à fente annulaire (110) selon l'une quelconque des trois revendications précédentes, dans lequel les dispositifs de réception (166) sont en communication fluidique avec la partie de réception tournante (178).

8. Appareil à fente annulaire (110) selon l'une quelconque des cinq revendications précédentes, dans lequel la partie de réception tournante (178) comprend au moins un dispositif de réception tournant (180) situé en dessous de la fente annulaire (114) et de préférence, en dessous des dispositifs de réception (166), de préférence au moins un entonnoir de réception et/ou au moins un gobelet de réception.

9. Appareil à fente annulaire (110) selon la revendication précédente, dans lequel le dispositif de réception (180) est en communication fluidique avec au moins une rigole de réception (186), de préférence une rigole de réception fixe (186), de préférence à raison d'au moins une rigole de réception (186) par dispositif de réception (180).

10. Appareil à fente annulaire (110) selon l'une quelconque des revendications précédentes, dans lequel le système de chargement (138) présente au moins une tuyère de chargement (142) destinée au chargement, notamment à un chargement ponctuel, de la substance de départ (140) à une position angulaire courante du système de chargement (138) dans la fente annulaire (114).

11. Appareil à fente annulaire (110) selon l'une quelconque des revendications précédentes, comportant en outre au moins un capteur de commande (196) destiné à détecter au moins une substance reçue par le système de réception (162).

12. Appareil à fente annulaire (110) selon la revendication précédente, dans lequel le capteur de commande (196) présente un capteur de commande (196) optique disposé transversalement à une direction d'écoulement (208) dans une section de mesure (198) et/ou un capteur de commande (196) optique disposé parallèlement à une direction d'écoulement (208) dans une section de mesure (198).

13. Appareil à fente annulaire (110) selon l'une quelconque des deux revendications précédentes, dans lequel l'appareil à fente annulaire (110) est en outre conçu pour commander et/ou réguler au moins un mécanisme d'entraînement (146, 182) d'une manière qui correspond à un signal de capteur (200) du capteur de commande (196).

14. Appareil à fente annulaire (110) selon la revendication précédente, dans lequel l'appareil à fente annulaire (110) est conçu pour commander et/ou réguler un système d'entraînement de chargement (146) pour entraîner en rotation le système de chargement (138) et/ou un système d'entraînement de réception (182) pour entraîner en rotation le système de réception (162), notamment un glissement entre un arbre de chargement et un arbre de réception, notamment à des fins de régulation et/ou de commande et/ou de réglage d'une qualité de produit.

15. Appareil à fente annulaire (110) selon l'une quelconque des revendications précédentes, dans lequel au moins une électrode (152) côté chargement et au moins une électrode (154) côté réception est prévue pour générer le champ électrique, notamment un champ électrique axial.

16. Appareil à fente annulaire (110) selon l'une quelconque des revendications précédentes, dans lequel la phase stationnaire (204) comprend une ou plusieurs des phases stationnaires (204) suivantes : des monolithes, des particules sphériques, une paroi de la fente annulaire (114).

17. Appareil à fente annulaire (110) selon l'une quelconque des revendications précédentes, dans lequel la fente annulaire (114) présente une ou plusieurs des dimensions suivantes : une largeur de fente annulaire comprise entre 0,01 et 1 mm ; une hauteur de fente annulaire comprise entre 50 mm et 1000 mm ; un diamètre de fente annulaire compris entre 200 mm et 500 mm.

18. Appareil à fente annulaire (110) selon l'une quelconque des revendications précédentes, comportant en outre au moins un système d'entraînement de chargement (146) destiné à entraîner en rotation le système de chargement (138) et au moins un système d'entraînement de réception (182) destiné à entraîner en rotation le système de réception (162), dans lequel le système d'entraînement de chargement (146) et le système d'entraînement de réception (182) peuvent être découplés mécaniquement.

19. Appareil à fente annulaire (110) selon l'une quelconque des revendications précédentes, comprenant en outre au moins une encapsulation (190) résistante à la pression entourant au moins partiellement le dispositif de séparation (112).

20. Appareil à fente annulaire (110) selon l'une quelconque des revendications précédentes, comprenant en outre au moins un dispositif de refroidissement (116), dans lequel le dispositif de refroidissement (116) est conçu pour refroidir au moins le dispositif de séparation (112).

21. Appareil à fente annulaire (110) selon l'une quelconque des revendications précédentes, comprenant en outre au moins un blindage électrique entourant au moins le dispositif de séparation (112).

22. Utilisation d'un appareil à fente annulaire (110) selon l'une quelconque des revendications précédentes pour séparer à des fins de préparation et de préférence en continu au moins un constituant (168) d'une substance de départ (140).

23. Procédé de séparation d'au moins un constituant (168) d'une substance de départ (140), dans lequel un appareil à fente annulaire (110) selon l'une quelconque des revendications de dispositif précédentes, est utilisé, dans lequel l'appareil à fente annulaire (110) comprend au moins un dispositif de séparation (112) ayant au moins une fente annulaire fixe (114), dans lequel la fente annulaire (114) est au moins partiellement remplie d'au moins une phase stationnaire (204) et est remplie d'au moins un électrolyte (136), dans lequel la substance de départ (140) est introduite dans la fente annulaire (114), dans lequel au moins l'un des constituants (168) de la substance de départ (140) et/ou de l'électrolyte (136), séparés dans le dispositif de séparation (112), est reçu, dans lequel un système de chargement (138) est utilisé pour introduire les constituants (168), lequel système de chargement tourne autour d'un axe (144) du dispositif de séparation (112) et un système de réception (162) est utilisé pour la réception, lequel système est conçu pour tourner au moins partiellement autour de l'axe (144) du dispositif de séparation (112), dans lequel le système de réception (162) et le système de chargement (138) peuvent être mis en rotation indépendamment l'un de l'autre et dans lequel la fente annulaire (114) est soumise à un champ électrique ayant au moins une composante axiale (168).
